(19) Europäisches Patentamt / European Patent Office / Office européen des brevets

(11) **EP 4 478 456 A1**

(12) **EUROPEAN PATENT APPLICATION**
published in accordance with Art. 153(4) EPC

(43) Date of publication:
**18.12.2024 Bulletin 2024/51**

(21) Application number: **22964677.3**

(22) Date of filing: **07.11.2022**

(51) International Patent Classification (IPC):
*H01M 4/485* (2010.01)    *H01M 4/525* (2010.01)

(52) Cooperative Patent Classification (CPC):
**H01M 4/485; H01M 4/525;** Y02E 60/10

(86) International application number:
**PCT/CN2022/130329**

(87) International publication number:
**WO 2024/098198 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **WANG, Bangrun**
  **Ningde, Fujian 352100 (CN)**
• **LUO, Dongsheng**
  **Ningde, Fujian 352100 (CN)**
• **LIU, Na**
  **Ningde, Fujian 352100 (CN)**

(74) Representative: **Ziebig Hengelhaupt Intellectual Property Attorneys Patentanwaltskanzlei PartGmbB**
**Leipziger Straße 49**
**10117 Berlin (DE)**

(54) **COATED LITHIUM-RICH METAL OXIDE MATERIAL, PREPARATION METHOD THEREFOR, DETERMINATION METHOD FOR COATING LAYER IN COATED LITHIUM-RICH METAL OXIDE MATERIAL, POSITIVE ELECTRODE SHEET, BATTERY AND ELECTRICAL APPARATUS**

(57)    The present application provides a coated lithium-rich metal oxide material and a preparation method therefor, a method for testing a coating layer in the coated lithium-rich metal oxide material, a positive electrode plate, a battery and a power consuming device. The coated lithium-rich metal oxide material of the present application comprises an inner core and a coating layer; the inner core comprises $Li_aMO_y$; M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$; the coating layer comprises one or more of carbon, silicon oxides, and metal oxides; and the weight growth rate of the coated lithium-rich metal oxide material after standing for 144 to 192 h at 25°C and a relative humidity of 40% is w, wherein w < 0.8%. The coated lithium-rich metal oxide material of the present application has a coating layer with high integrity and compactness, which reduces the dissolution of lithium, improves the capacity of the battery, and reduces the resistance of the material. The method of the present application can accurately and quickly test the integrity and compactness of the coating layer in the coated lithium-rich metal oxide material.

*FIG. 8*

EP 4 478 456 A1

## Description

**Technical Field**

The present application relates to the technical field of batteries, and in particular to a coated lithium-rich metal oxide material and a preparation method therefor, a method for testing a coating layer in the coated lithium-rich metal oxide material, a positive electrode plate, a battery and a power consuming device.

**Background Art**

In recent years, with the increasing application range, secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, safety performance, etc.

The lithium content in a lithium-rich metal oxide material is relatively high, and the lithium is easy to dissolve into the external environment to generate side reactions with carbon dioxide and/or water, resulting in a gel-like by-product with a strong alkalinity on the surface of the material, which affects the migration of lithium ions, reduces the charge capacity of the battery and increases the resistance of the material.

**Summary of the Invention**

The present application has been made in view of the above problems, and an objective of the present application is to provide a coated lithium-rich metal oxide material and a preparation method therefor, a method for testing a coating layer in the coated lithium-rich metal oxide material, a positive electrode plate, a battery and a power consuming device. The coated lithium-rich metal oxide material of the present application has a coating layer with high integrity and compactness, such that the dissolution of the lithium in the inner core of the lithium-rich metal oxide to the external environment can be reduced to generate side reactions, which improves the capacity of the battery, reduces the resistance of the material and improves the migration rate of lithium ions; and the method for testing the coating layer in the coated lithium-rich metal oxide material of the present application can accurately and quickly test the integrity and compactness of the coating layer and is simple to operate.

In order to achieve the above objective, a first aspect of the present application provides a coated lithium-rich metal oxide material, which comprises an inner core and a coating layer coating the inner core;

the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$;
the coating layer comprises one or more of carbon, silicon oxides, and metal oxides;
the weight growth rate of the coated lithium-rich metal oxide material after standing for 144 to 192 h in an environment at 25°C and a relative humidity of 40% is w, wherein w < 0.8%, and
optionally, w ≤ 0.5%.

Therefore, the coated lithium-rich metal oxide material of the present application has a coating layer with relatively high integrity and compactness, such that the dissolution of free lithium in the inner core of the lithium-rich metal oxide can be reduced and thus the side reactions of the dissolved free lithium with external substances, which improves the charge capacity of the battery, improves the migration rate of lithium ions and reduces the resistance of the material.

A second aspect of the present application provides a coated lithium-rich metal oxide material, which comprises an inner core and a coating layer coating the inner core;

the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$;
the coating layer comprises one or more of carbon, silicon oxides, and metal oxides;
and the d value of the coated lithium-rich metal oxide material satisfies:
when

$$2 \leq a < 3, d \leq 500 \text{ ppm};$$

when

$$3 \leq a < 4, d \leq 1000 \text{ ppm};$$

and
when

$$4 \leq a \leq 6, d \leq 1500 \text{ ppm};$$

wherein the d value of the coated lithium-rich metal oxide material is tested by the following steps:

mixing the coated lithium-rich metal oxide material with a solvent at a mass ratio of 1 : 50 to 1 : 1, wherein the solvent is composed of water and ethanol, the mass content of water in the solvent is b, and b satisfies:
when

$$2 \leq a < 3, b = 100\% - a \times 10\%;$$

when

$$3 \leq a < 4, b = 100\% - a \times 20\%;$$

and
when

$$4 \leq a \leq 6, b = 0;$$

separating a liquid phase substance in the obtained mixture, carrying out potentiometric titration on the liquid phase substance to calculate the content of the dissolved free lithium in the coated lithium-rich metal oxide material, i.e., the d value of the coated lithium-rich metal oxide material.

Therefore, on the basis of the first aspect, the integrity and compactness of the coating layer in the coated lithium-rich metal oxide material of the present application are further increased, the dissolution of free lithium in the inner core of the lithium-rich metal oxide is further reduced and thus the side reactions between the dissolved free lithium and the external environment, thereby further increasing the charge capacity of the battery and the migration rate of lithium ions, and further reducing the resistance of the coated lithium-rich metal oxide material.

In any embodiment, M comprises one or more elements of Ni, Co, Fe, Mn, Cu, V and Nb, and optionally one or more elements of Ni, Co, Fe, Cu and Nb.

In any embodiment, the inner core comprises one or more of $Li_2NiO_2$, $Li_2CuO_2$, $Li_2MnO_3$, $Li_3VO_4$, $Li_3NbO_4$, $Li_5FeO_4$ and $Li_6CoO_4$, and optionally one or more of $Li_2NiO_2$, $Li_2CuO_2$, $Li_3NbO_4$, $Li_5FeO_4$ and $Li_6CoO_4$.

In any embodiment, the coating layer comprises one or more of carbon, silicon dioxide, aluminum oxide and titanium oxide.

Therefore, in the present application, the coating layer with relatively high integrity and compactness can be obtained, so that the dissolution of free lithium in the lithium-rich inner core is reduced, the side reactions of the dissolved free lithium is reduced, the charge capacity of the battery is increased, the resistance of the material is reduced, and the migration rate of lithium ions is increased.

In any embodiment, the mass content of the coating layer in the coated lithium-rich metal oxide material is 1.3% to 10%, and optionally 3% to 7%.

Therefore, it is beneficial to form a uniform, complete and compact coating layer, reduce the dissolution of free lithium in the lithium-rich inner core, improve the capacity of the battery, reduce the resistance of the material, and obtain a relatively high migration rate of lithium ions.

In any embodiment, the particle size $D_v50$ of the coated lithium-rich metal oxide material is 2 to 10 $\mu$m, optionally 4 to 10 $\mu$m, and more optionally 4 to 8 $\mu$m.

Therefore, the coated lithium-rich metal oxide material is guaranteed to have a suitable specific surface area, which ensures the stability, integrity and compactness of the coating layer and is beneficial to the migration of lithium ions at the same time, thereby improving the charge capacity of the battery.

In any embodiment, the mass content of water in the coated lithium-rich metal oxide material is $\leq 1000$ ppm, optionally $\leq 500$ ppm, more optionally $\leq 300$ ppm, and further optionally $\leq 200$ ppm.

Therefore, the dissolution of free lithium in the lithium-rich inner core is further reduced, and the side reactions of dissolved lithium is further reduced, thereby further increasing the migration of lithium ions and the charge capacity of the battery, and further reducing the resistance of the material.

In any embodiment, the powder resistivity of the coated lithium-rich metal oxide material is < 4 $\Omega \cdot cm$ as tested under a pressure of 20 MPa, and optionally $\leq 3.3\,\Omega$ cm. The reduction of resistivity is beneficial to increasing the migration rate of lithium ions and improving the charge capacity and rate of the battery.

A third aspect of the present application further provides a method for preparing a coated lithium-rich metal oxide material, including the following steps:

> providing a compound $Li_zMO_y$, wherein $0.98 \leq z \leq 1.02$, and $2 \leq y' \leq 3$;
> coating $Li_zMO_{y'}$ by a plasma enhanced chemical vapor deposition method;
> mixing the coated product with a lithium source and sintering same to obtain the coated lithium-rich metal oxide material.

The plasma enhanced chemical vapor deposition (PECVD) method is carried out by using a low-temperature plasma as an energy source, placing a substance to be coated on a cathode of glow discharge under a low gas pressure, and using the glow discharge or adding a heating element to heat the substance to be coated to a preset temperature, and then introducing an appropriate amount of a reaction gas, followed by a series of chemical reactions and plasma reactions to form a coating layer on the surface of the substance to be coated. The difference between PECVD and an ordinary CVD method is that the low-temperature plasma comprises a large number of high-energy electrons, which can provide the activation energy required for the process. The collision between electrons and reaction gas molecules can promote the decomposition, chemical combination, excitation and ionization of molecules, resulting in various chemical groups with high activity and significantly reducing the temperature required for coating treatment.

Therefore, the present application uses the plasma enhanced chemical vapor deposition method to coat the compound $Li_zMO_{y'}$, due to the lithium content of the compound $Li_zMO_{y'}$ is low, and the reaction gas during the coating treatment is not easy to generate side reactions with the lithium in the compound $Li_zMO_{y'}$, the stability and effectiveness of the coating treatment operation are ensured; mixing the coated product with lithium and sintering same to obtain a lithium-rich metal oxide material, with the coating layer thereof having relatively high integrity and compactness. Moreover, the method of the present application is simple to operate and easy for industrial popularization.

In any embodiment, the coated lithium-rich metal oxide material comprises an inner core and a coating layer coating the inner core, wherein the inner core comprises $Li_aMO_y$, and the coating layer comprises one or more of carbon, silicon oxides and metal oxides;

wherein a, M and y are described as in the first or second aspect of the present application.

In any embodiment, the coated lithium-rich metal oxide material is the coated lithium-rich metal oxide material of the first or second aspect of the present application.

In any embodiment, the operating parameters for the plasma enhanced chemical vapor deposition method comprise:

> a microwave power being 200 to 1000 W, and optionally 200 to 800 W or 500 to 1000 W; and/or,
> a gas pressure inside a chemical vapor deposition furnace being -10 to 1000 Pa, and optionally 10 to 1000 Pa or -10 to 100 Pa; and/or,
> a temperature inside the chemical vapor deposition furnace being 400°C to 600°C, and optionally 450°C to 550°C; and/or,
> a deposition time being 2 to 10 h, optionally 4 to 8 h, and more optionally 5 to 8 h; and/or,
> a gas flow rate at a gas inlet of the chemical vapor deposition furnace being 10 to 1000 sccm, optionally 100 to 700 sccm, and more optionally 200 to 500 sccm.

The microwave power in the above range is beneficial to ensuring the ionization deposition rate of the reaction gas, such that a uniform, complete and dense coating layer is formed on the surface of the substance to be coated, and the side reactions between the substance to be coated and the reaction gas are reduced at the same time.

The gas pressure inside the furnace in the above range can ensure the reaction rate of the vapor deposition and ensure the effective coating of the inner core by the coating layer, thereby forming a uniform, complete and dense coating layer and reducing the occurrence of defects.

The temperature inside the furnace in the above range can increase the ionization deposition rate of the reaction gas, such that a uniform, complete and dense coating layer is formed on the surface of the substance to be coated, and the mass loss of the substance to be coated caused by the side reactions between the substance to be coated and the reaction gas is reduced at the same time.

The deposition time in the above range is beneficial to ensuring a proper content of a coating layer substance and forming a uniform, complete and dense coating layer, which is beneficial to the capacity performance of the battery.

The gas flow rate at the gas inlet in the above range can ensure a proper content of the coating layer substance, which results in a uniform, complete and dense coating layer and reduces the waste of the reaction gas.

In any embodiment, the raw material used in the coating treatment is selected from one or more of carbon sources, silicon oxide sources and metal oxide sources;

optionally, the raw material used in the coating treatment is selected from one or more of organic carbon sources, organic silicon sources, inorganic silicon sources, organic aluminum sources, inorganic aluminum sources, organic titanium sources and inorganic titanium sources, more optionally one or more of organic gases, organic silicon sources, organic aluminum sources and organic titanium sources; and

optionally, the raw material used in the coating treatment is selected from one or more of ethylene, acetylene, methane, acetone, ethanol, benzene, ethyl orthosilicate, silicon tetrachloride, aluminum isopropoxide, tetrabutyl titanate and titanium tetrachloride, and more optionally one or more of ethylene, acetylene, methane, tetraethyl orthosilicate, aluminum isopropoxide and tetrabutyl titanate.

The raw material used in the above coating treatment is beneficial to forming a uniform, complete and dense coating layer on the surface of the substance to be coated, and at the same time, the above raw material is not easy to cause side reactions of the substance to be coated, which ensures the effectiveness and stability of the coating treatment and also reduces the waste of the raw material.

In any embodiment, the sintering temperature is 500°C to 700°C, optionally 550°C to 650°C, and more optionally 600°C to 650°C; and/or,

the sintering time is 4 h to 10 h, optionally 6 h to 8 h, and more optionally 6 h to 7 h; and/or,
the heating rate of the sintering is 2°C/min to 8°C/min, and optionally 4°C/min to 6°C/min; and/or,
the sintering is performed in an inert atmosphere.

The sintering temperature, sintering time and heating rate of the sintering in the above ranges are beneficial to obtaining a coated lithium-rich metal oxide with a high crystallinity, reducing the generation of by-products and saving energy consumption.

In any embodiment, the molar ratio of the lithium element in the lithium source to $Li_zMO_{y'}$ is (a-z) : 1. It is beneficial to form a lithium-rich metal oxide inner core, thereby obtaining a lithium-rich metal oxide material covered with a complete and dense coating layer.

In any embodiment, $Li_zMO_{y'}$ is crushed before the coating treatment. It is beneficial to the uniformity of the coating treatment, and can ensure that the coated lithium-rich metal oxide material has a suitable specific surface area, which is beneficial to the migration of lithium ions and the capacity performance of the battery.

Before the coating treatment, a raw material used in the coating treatment is gasified, optionally at 300°C to 500°C. For a non-gaseous raw material, gasification is required to obtain a reaction gas required for the coating treatment, so as to ensure the performance of a plasma enhanced chemical vapor deposition method.

The prepared coated lithium-rich metal oxide material is crushed and screened, optionally in a dry environment, so as to ensure that the coated lithium-rich metal oxide material has proper water content and particle size.

In any embodiment, $Li_zMO_{y'}$ is prepared by the following steps:
mixing a lithium source and a source of an M element, and sintering same; wherein the molar ratio of the lithium element in the lithium source to the M element in the source of the M element is 0.98 : 1 to 1.09 : 1, optionally 0.98 : 1 to 1.02 : 1 or 1 : 1 to 1.09 : 1, and more optionally 1 : 1 to 1.05 : 1.

Because the lithium content of the compound $Li_zMO_{y'}$ is low, the stability of coating treatment with the compound $Li_zMO_{y'}$ is better and an effective coating can be realized.

In any embodiment, in the steps of preparing $Li_zMO_{y'}$:

the sintering temperature is 400°C to 600°C, and optionally 450°C to 550°C; and/or,
the sintering time is 2 h to 8 h, and optionally 4 h to 6 h; and/or,
the heating rate of the sintering is 4°C/min to 10°C/min, and optionally 6°C/min to 8°C/min; and/or,
the sintering is performed in an inert atmosphere.

In any embodiment, the lithium source comprises one or more of lithium oxide, lithium carbonate, lithium oxalate, lithium acetate and lithium hydroxide; and/or,
the source of the M element is selected from one or more of oxides, hydroxides, halides, sulfates, carbonates, nitrates, oxalates, acetates, sulfides and nitrides of the M element, and optionally oxides of the M element.

A fourth aspect of the present application provides a method for testing a coating layer in a coated lithium-rich metal oxide material, including the following steps:

providing a coated lithium-rich metal oxide material, which comprises an inner core and a coating layer coating the inner core, wherein the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$; the coating layer comprises one or more of carbon, silicon oxides, and metal oxides;

mixing the coated lithium-rich metal oxide material with a solvent at a mass ratio of 1 : 50 to 1 : 1, and optionally a mass ratio of 1 : 50 to 1 : 10, wherein the solvent is composed of water and ethanol, the mass content of water in the solvent is b, and b satisfies: when $2 \leq a < 3$, b = 100% - a $\times$ 10%; when $3 \leq a < 4$, b = 100% - a $\times$ 20%; and when $4 \leq a \leq 6$, b = 0; separating a liquid phase substance in the obtained mixture, carrying out titration on the liquid phase substance to calculate the content of the dissolved free lithium in the coated lithium-rich metal oxide material, i.e., a d value, and confirming whether the d value satisfies:

when $2 \leq a < 3$, d $\leq$ 500 ppm; when $3 \leq a < 4$, d $\leq$ 1000 ppm; and when $4 \leq a \leq 6$, d $\leq$ 1500 ppm.

In the present application, according to the different lithium contents of the inner core of the lithium-rich metal oxide, solvents with different water contents (deionized water, anhydrous ethanol or a mixed solution of the two) are used to dissolve the free lithium in the material and react with the dissolved free lithium, and the compactness and integrity of the coating layer are judged by testing the content of the dissolved free lithium in the material, and the test results have a high accuracy, a good reliability and a fast detection speed; at the same time, the coating layer can be prevented from being damaged during the test.

In any embodiment, the mixing time is 1 min to 4 min, and optionally 1 min to 3 min; and/or,

the mixing is carried out under the stirring condition of a rotation speed of 200 rpm to 800 rpm, and optionally 400 rpm to 800 rpm; and/or,
the test is carried out at 25°C; and/or,
the titration is potentiometric titration.

The mixing time and stirring rotation speed in the above ranges can ensure that the dissolved lithium of the coated lithium-rich metal oxide material reacts fully and effectively with the solvent, which ensures the accuracy and reliability of the test results and can avoid damaging the coating layer.

In any embodiment, the content of the dissolved free lithium in the coated lithium-rich metal oxide material is tested by the following steps:

mixing the coated lithium-rich metal oxide material with a solvent at a mass ratio of 1 : 50 to 1 : 1, and optionally a mass ratio of 1 : 50 to 1 : 10, wherein the solvent is composed of water and ethanol, the mass content of water in the solvent is b, and b satisfies: when $2 \leq a < 3$, b = 100% - a $\times$ 10%; when $3 \leq a < 4$, b = 100% - a $\times$ 20%; and when $4 \leq a \leq 6$, b = 0; separating the liquid phase substance in the obtained mixture, taking the liquid phase substance, and carrying out potentiometric titration with an ethanol solution of hydrochloric acid as a titrant, wherein the volumes of the consumed titrant corresponding to the two electric potential jump points in the titration process are $V_1$ mL and $V_2$ mL, respectively, and $V_2 > V_1$; and
calculating the content of the dissolved free lithium in the coated lithium-rich metal oxide material, i.e., the d value, according to the following formula;

$$d = C \times V_a \times (69.4684V_2 - 0.0424V_1) / (m \times V_b)$$

wherein,

m represents the mass of the coated lithium-rich metal oxide material, in g;
$V_a$ represents the volume of the solvent, in mL;
$V_b$ represents the volume of the taken liquid phase substance, in mL; and
C represents the concentration of hydrochloric acid in the titrant, in mol/L.

A fifth aspect of the present application provides a positive electrode plate comprising a coated lithium-rich metal oxide material of the first or second aspect of the present application or a coated lithium-rich metal oxide material prepared by a method of the third aspect of the present application.

A sixth aspect of the present application provides a battery comprising a coated lithium-rich metal oxide material of the first or second aspect of the present application, a coated lithium-rich metal oxide material prepared by a method of the third aspect of the present application, or a positive electrode plate of fifth aspect of the present application.

A seventh aspect of the present application provides a power consuming device comprising a battery of the sixth aspect of the present application.

## Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using a secondary battery according to an embodiment of the present application as a power source.
Fig. 7 shows a TEM photograph of a lithium-rich metal oxide material prepared in Comparative example 1.
Fig. 8 shows a TEM photograph of a coated lithium-rich metal oxide material prepared in Example 1.
Fig. 9 shows a TEM photograph of a coated lithium-rich metal oxide material prepared in Comparative example 2.

Description of reference signs:
1 - battery pack; 2 - upper box body; 3 - lower box body; 4 - battery module; 5 - secondary battery; 51 - housing; 52 - electrode assembly; 53 - top cover assembly.

## Detailed Description of Embodiments

Hereinafter, embodiments of a coated lithium-rich metal oxide material and a preparation method therefor, a method for testing a coating layer in a coated lithium-rich metal oxide material, a positive electrode plate, a battery and a power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed in the text, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may comprise steps (a) and (b) carried out sequentially, and may also comprise steps (b) and (a) carried out sequentially. For example, reference to "the method may further comprise step (c)" indicates that step (c) may be added to the method in any order, e.g., the method may comprise steps (a), (b) and (c), steps (a), (c) and (b), or steps (c), (a) and (b).

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

[Secondary battery]

A secondary battery, also known as a rechargeable battery or an accumulator, refers to a battery of which an active material can be activated by means of charging for reuse after the battery is discharged.

Generally, the secondary battery comprises a positive electrode plate, a negative electrode plate, a separator and an electrolyte solution. During a charge/discharge process of the battery, active ions (e.g., lithium ions) are intercalated and de-intercalated back and forth between the positive electrode plate and the negative electrode plate. The separator is arranged between the positive electrode plate and the negative electrode plate, and mainly play a role of preventing the positive and negative electrodes from short-circuiting and enabling active ions to pass through. The electrolyte solution is provided between the positive electrode plate and the negative electrode plate and mainly functions for active ion conduction.

[Coated lithium-rich metal oxide material]

An embodiment of the present application provides a coated lithium-rich metal oxide material, which comprises an inner core and a coating layer coating the inner core;

the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$;
the coating layer comprises one or more of carbon, silicon oxides, and metal oxides;
the weight growth rate of the coated lithium-rich metal oxide material after standing for 144 to 192 h (for example, 168 h) in an environment at 25°C and a relative humidity of 40% is w, wherein w < 0.8%, and
optionally, w ≤ 0.5%.

Although the mechanism is not yet clear, the inventors have discovered: the coated lithium-rich metal oxide material of the present application has a coating layer with high integrity and compactness, which blocks and reduces the dissolution of free lithium in the inner core of the lithium-rich metal oxide, reduces the loss of active lithium, and improves the charge capacity of the battery. Because the dissolved free lithium is easy to generate side reactions with external substances to generate a by-product with a strong alkalinity, the by-product is easy to cause the gelling of a slurry, which hinders the migration of lithium ions and battery processing, and increases the resistance of the material at the same time. Therefore, the coating layer of the coated lithium-rich metal oxide material of the present application reduces the dissolution of free lithium, thereby improving the migration rate of lithium ions, reducing the resistance of the material, which is more beneficial to the processing of a battery product.

Another embodiment of the present application provides a coated lithium-rich metal oxide material, which comprises an inner core and a coating layer coating the inner core;

the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, for example, 2, 3, 4, 5, 6 and a range formed by any two of the above values, and $2 \leq y \leq 4$, for example, 2, 3, 4 and a range formed by any two of the above values;
the coating layer comprises one or more of carbon, silicon oxides, and metal oxides;
and the d value of the coated lithium-rich metal oxide material satisfies:

when

$$2 \leq a < 3, d \leq 500 \text{ ppm};$$

when

$$3 \leq a < 4, d \leq 1000 \text{ ppm};$$

and

when

$$4 \leq a \leq 6, d \leq 1500 \text{ ppm};$$

wherein the d value of the coated lithium-rich metal oxide material is tested by the following steps:

mixing the coated lithium-rich metal oxide material with a solvent at a mass ratio of 1 : 50 to 1 : 1 (for example, 1 : 1, 1 : 10, 1 : 20, 1 : 40 and a range formed by any two of the above values), wherein the solvent is composed of water and ethanol, the mass content of water in the solvent is b, and b satisfies:

when

$$2 \leq a < 3, b = 100\% - a \times 10\%;$$

when

$$3 \leq a < 4, b = 100\% - a \times 20\%;$$

and

when

$$4 \leq a \leq 6, b = 0;$$

separating a liquid phase substance in the obtained mixture, carrying out potentiometric titration on the liquid phase substance to calculate the content of the dissolved free lithium in the coated lithium-rich metal oxide material, i.e., the d value of the coated lithium-rich metal oxide material.

Therefore, on the basis of the first embodiment, the integrity and compactness of the coating layer in the coated lithium-rich metal oxide material of the present application are further increased, the dissolution of free lithium in the inner core of the lithium-rich metal oxide is further reduced and thus the side reactions between the dissolved free lithium and the external substances, thereby further increasing the capacity of the battery and the migration rate of lithium ions, and further reducing the resistance of the material.

In some embodiments, M comprises one or more elements of Ni, Co, Fe, Mn, Cu, V and Nb, and optionally one or more elements of Ni, Co, Fe, Cu and Nb.

In some embodiments, the inner core comprises one or more of $Li_2NiO_2$, $Li_2CuO_2$, $Li_2MnO_3$, $Li_3VO_4$, $Li_3NbO_4$, $Li_5FeO_4$ and $Li_6CoO_4$, and optionally one or more of $Li_2NiO_2$, $Li_2CuO_2$, $Li_3NbO_4$, $Li_5FeO_4$ and $Li_6CoO_4$.

In some embodiments, the coating layer comprises one or more of carbon, silicon dioxide, aluminum oxide and titanium oxide.

Therefore, in the present application, the coating layer with relatively high integrity and compactness can be obtained, so that the dissolution of free lithium in the lithium-rich inner core is reduced, the side reactions of the dissolved free lithium is reduced, the charge capacity of the battery is increased, the resistance of the coated lithium-rich metal oxide material is reduced, and the migration rate of lithium ions is increased.

In some embodiments, the mass content of the coating layer in the coated lithium-rich metal oxide material is 1.3% to 10%, and optionally 3% to 7%, for example 2%, 3%, 4%, 5%, 6%, 7%, 8%, 9%, 10% and a range formed by any two of the above values.

Therefore, it is beneficial to form a uniform, complete and compact coating layer, reduce the dissolution of free lithium in the lithium-rich inner core, improve the capacity of the battery, reduce the resistance of the material, and obtain a relatively high migration rate of lithium ions.

In some embodiments, the particle size $D_v50$ of the coated lithium-rich metal oxide material is 2 to 10 $\mu$m, optionally 4 to 10 $\mu$m, and more optionally 4 to 8 $\mu$m, for example, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m and a range formed by any two of the above values.

Therefore, the coated lithium-rich metal oxide material is guaranteed to have a suitable specific surface area, which ensures the stability, integrity and compactness of the coating layer and is beneficial to the migration of lithium ions at the same time, thereby improving the charge capacity of the battery.

In some embodiments, the mass content of water in the coated lithium-rich metal oxide material is $\leq$ 1000 ppm,

optionally ≤ 500 ppm, more optionally ≤ 400 ppm or ≤ 300 ppm, further optionally ≤ 200 ppm, and more further optionally ≤ 100 ppm.

Therefore, the dissolution of free lithium in the lithium-rich inner core is further reduced, and the side reactions of dissolved lithium is further reduced, thereby further increasing the migration of lithium ions and the charge capacity of the battery, and further reducing the resistance of the material.

In some embodiments, the powder resistivity of the coated lithium-rich metal oxide material is < 4 Ω·cm as tested under a pressure of 20 MPa, optionally ≤ 3.3 Ω·cm, and more optionally ≤ 3 Ω·cm, ≤ 2 Ω·cm, and ≤ 1 Ω·cm. The reduction of resistivity is beneficial to increasing the migration rate of lithium ions and improving the charge capacity and rate of the battery.

[Method for preparing coated lithium-rich metal oxide material]

An embodiment of the present application provides a method for preparing a coated lithium-rich metal oxide material, including the following steps:

providing a compound $Li_zMO_{y'}$, wherein $0.98 \leq z \leq 1.02$, and $2 \leq y' \leq 3$;
coating $Li_zMO_{y'}$ by a plasma enhanced chemical vapor deposition method;
mixing the coated product with a lithium source and sintering same to obtain the coated lithium-rich metal oxide material.

The plasma enhanced chemical vapor deposition (PECVD) method is carried out by using a low-temperature plasma as an energy source, placing a substance to be coated on a cathode of glow discharge under a low gas pressure, and using the glow discharge or adding a heating element to heat the substance to be coated to a preset temperature, and then introducing an appropriate amount of a reaction gas, followed by a series of chemical reactions and plasma reactions to form a coating layer on the surface of the substance to be coated. The difference between PECVD and an ordinary CVD method is that the low-temperature plasma comprises a large number of high-energy electrons, which can provide the activation energy required for the process. The collision between electrons and reaction gas molecules can promote the decomposition, chemical combination, excitation and ionization of molecules, resulting in various chemical groups with high activity and significantly reducing the temperature required for coating treatment.

Therefore, the present application uses the plasma enhanced chemical vapor deposition method to coat the compound $Li_zMO_{y'}$, due to the lithium content of the compound $Li_zMO_{y'}$ is low, the stability of the compound is high, the temperature required for the plasma enhanced chemical vapor deposition method is lower and the reaction gas during the coating treatment is not easy to generate side reactions with the lithium in the compound $Li_zMO_{y'}$, the stability and effectiveness of the coating treatment are ensured; mixing the coated product with lithium and sintering same to obtain a lithium-rich metal oxide material, with the coating layer thereof having high integrity and compactness. Moreover, the method of the present application is simple to operate and easy for industrial popularization.

In some embodiments, the coated lithium-rich metal oxide material comprises an inner core and a coating layer coating the inner core, wherein the inner core comprises $Li_aMO_y$, and the coating layer comprises one or more of carbon, silicon oxides and metal oxides;

wherein a, M and y are as described in [Coated lithium-rich metal oxide material] of the present application; and in some embodiments, the coated lithium-rich metal oxide material is as described in [Coated lithium-rich metal oxide material] of the present application.

In some embodiments, the operating parameters for the plasma enhanced chemical vapor deposition method comprise:

a microwave power being 200 to 1000 W, and optionally 200 to 800 W or 500 to 1000 W, for example, 200 W, 300 W, 400 W, 500 W, 600 W, 700 W, 800 W, 900 W, 1000 W or a range formed by any two of the above values; and/or,
a gas pressure inside a chemical vapor deposition furnace being -10 to 1000 Pa, and optionally 10 to 1000 Pa or -10 to 100 Pa, for example, -10 Pa, 0 Pa, 10 Pa, 20 Pa, 50 Pa, 100 Pa, 150 Pa, 200 Pa, 300 Pa, 400 Pa, 500 Pa, 600 Pa, 700 Pa, 800 Pa, 900 Pa, 1000 Pa or a range formed by any two of the above values; and/or,
a temperature inside a chemical vapor deposition furnace being 400°C to 600°C, optionally 450°C to 550°C, for example, 400°C, 450°C, 500°C, 550°C, 600°C or a range formed by any two of the above values; and/or,
a deposition time being 2 to 10 h, optionally 4 to 8 h, and more optionally 5 to 8 h, for example, 2 h, 3 h, 4 h, 5 h, 6 h, 7 h, 8 h, 9 h, 10 h or a range formed by any two of the above values; and/or,
a gas flow rate at a gas inlet of the chemical vapor deposition furnace being 10 to 1000 sccm, optionally 100 to 700 sccm, and more optionally 200 to 500 sccm, for example, 20 sccm, 50 sccm, 100 sccm, 200 sccm, 300 sccm, 400 sccm, 500 sccm, 600 sccm, 700 sccm, 800 sccm, 900 sccm, 1000 sccm or a range formed by any two of the above values.

The above "sccm" represents a flow unit at standard atmospheric pressure - milliliter/minute.

The microwave power in the above range is beneficial to ensuring the ionization deposition rate of the reaction gas, such that a uniform, complete and dense coating layer is formed on the surface of the substance to be coated, and the side reactions between the substance to be coated and the reaction gas are reduced at the same time.

The gas pressure inside the furnace in the above range can ensure the reaction rate of the vapor deposition and ensure the effective coating of the inner core by the coating layer, thereby forming a uniform, complete and dense coating layer and reducing the occurrence of defects.

The temperature inside the furnace in the above range can increase the ionization deposition rate of the reaction gas, such that a uniform, complete and dense coating layer is formed on the surface of the substance to be coated, and the mass loss of the substance to be coated caused by the side reactions between the substance to be coated and the reaction gas is reduced at the same time.

The deposition time in the above range is beneficial to ensuring a proper content of a coating layer substance and forming a uniform, complete and dense coating layer, which is beneficial to the capacity performance of the battery.

The gas flow rate at the gas inlet in the above range can ensure a proper content of the coating layer substance, which results in a uniform, complete and dense coating layer and reduces the waste of the reaction gas.

In some embodiments, the raw material used in the coating treatment is selected from one or more of carbon sources, silicon oxide sources and metal oxide sources;

optionally, the raw material used in the coating treatment is selected from one or more of organic carbon sources, organic silicon sources, inorganic silicon sources, organic aluminum sources, inorganic aluminum sources, organic titanium sources and inorganic titanium sources, more optionally one or more of organic gases, organic silicon sources, organic aluminum sources and organic titanium sources; and

optionally, the raw material used in the coating treatment is selected from one or more of ethylene, acetylene, methane, acetone, ethanol, benzene, ethyl orthosilicate, silicon tetrachloride, aluminum isopropoxide, tetrabutyl titanate and titanium tetrachloride, and more optionally one or more of ethylene, acetylene, methane, tetraethyl orthosilicate, aluminum isopropoxide and tetrabutyl titanate.

The raw material used in the above coating treatment is beneficial to forming a uniform, complete and dense coating layer on the surface of the substance to be coated, and at the same time, the above raw material is not easy to cause side reactions of the substance to be coated, which ensures the effectiveness and stability of the coating treatment and also reduces the waste of the raw material.

In some embodiments, the sintering temperature is 500°C to 700°C, optionally 550°C to 650°C, and more optionally 600°C to 650°C, for example, 500°C, 550°C, 600°C, 650°C, 700°C or a range formed by any two of the above values; and/or,

the sintering time is 4 h to 10 h, optionally 6 h to 8 h, and more optionally 6 h to 7 h, for example, 4 h, 5 h, 6 h, 7 h, 8 h, 9 h, 10 h or a range formed by any two of the above values; and/or,
the heating rate of the sintering is 2°C/min to 8°C/min, and optionally 4°C/min to 6°C/min, for example, 2°C/min, 3°C/min, 4°C/min, 5°C/min, 6°C/min, 7°C/min, 8°C/min or a range formed by any two of the above values; and/or,
the sintering is performed in an inert atmosphere.

The sintering temperature, sintering time and heating rate of the sintering in the above ranges are beneficial to obtaining a coated lithium-rich metal oxide with a high crystallinity, reducing the generation of by-products and saving energy consumption.

In some embodiments, the molar ratio of the lithium element in the lithium source to $Li_zMO_{y'}$ is (a-z) : 1. It is beneficial to form a lithium-rich metal oxide inner core, thereby obtaining a lithium-rich metal oxide material covered with a complete and dense coating layer.

In some embodiments, $Li_zMO_{y'}$ is crushed before the coating treatment. It is beneficial to the uniformity of the coating treatment, and can ensure that the coated lithium-rich metal oxide material has a suitable specific surface area, which is beneficial to the migration of lithium ions and the capacity performance of the battery.

Before the coating treatment, a raw material used in the coating treatment is gasified, optionally at 300°C to 500°C. For a non-gaseous raw material, gasification is required to obtain a reaction gas required for the coating treatment, so as to ensure the performance of a plasma enhanced chemical vapor deposition method.

The prepared coated lithium-rich metal oxide material is crushed and screened, optionally in a dry environment, so as to ensure that the coated lithium-rich metal oxide material has proper water content and particle size.

In some embodiments, $Li_zMO_{y'}$ is prepared by the following steps:
mixing a lithium source and a source of an M element, and sintering same; wherein the molar ratio of the lithium element in the lithium source to the M element in the source of the M element is 0.98 : 1 to 1.09 : 1, optionally 0.98 : 1 to 1.02 : 1 or 1 : 1 to 1.09 : 1, more optionally 1 : 1 to 1.05 : 1, and further optionally 1 : 1 to 1.02 : 1.

Because the lithium content of the compound $Li_zMO_{y'}$ is low, the stability of coating treatment with the compound $Li_zMO_{y'}$ is better and an effective coating can be realized.

In some embodiments, in the steps of preparing $Li_zMO_{y'}$:

the sintering temperature is 400°C to 600°C, optionally 450°C to 550°C, for example, 400°C, 450°C, 500°C, 550°C, 600°C or a range formed by any two of the above values; and/or,

the sintering time is 2 h to 8 h, and optionally 4 h to 6 h, for example, 2 h, 3 h, 4 h, 5 h, 6 h, 7 h, 8 h or a range formed by any two of the above values; and/or,

the heating rate of the sintering is 4°C/min to 10°C/min, and optionally 6°C/min to 8°C/min, for example, 4°C/min, 5°C/min, 6°C/min, 7°C/min, 8°C/min, 9°C/min, 10°C/min or a range formed by any two of the above values; and/or,

the sintering is performed in an inert atmosphere.

In some embodiments, the lithium source comprises one or more of lithium oxide, lithium carbonate, lithium oxalate, lithium acetate and lithium hydroxide; and/or,
the source of the M element is selected from one or more of oxides, hydroxides, halides, sulfates, carbonates, nitrates, oxalates, acetates, sulfides and nitrides of the M element, and optionally oxides of the M element.

[Method for testing coating layer in coated lithium-rich metal oxide material]

An embodiment of the present application provides a method for testing a coating layer in a coated lithium-rich metal oxide material, including the following steps:

providing a coated lithium-rich metal oxide material, which comprises an inner core and a coating layer coating the inner core, wherein the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$; the coating layer comprises one or more of carbon, silicon oxides, and metal oxides;

mixing the coated lithium-rich metal oxide material with a solvent at a mass ratio of 1 : 50 to 1 : 1 (optionally a mass ratio of 1 : 50 to 1 : 10, for example, 1 : 1, 1 : 10, 1 : 20, 1 : 40 and a range formed by any two of the above values), wherein the solvent is composed of water and ethanol, the mass content of water in the solvent is b, and b satisfies: when $2 \leq a < 3$, b = 100% - a $\times$ 10%; when $3 \leq a < 4$, b = 100% - a $\times$ 20%; and when $4 \leq a \leq 6$, b = 0;

separating a liquid phase substance in the obtained mixture, carrying out titration on the liquid phase substance to calculate the content of the dissolved free lithium in the coated lithium-rich metal oxide material, i.e., a d value, and confirming whether the d value satisfies:

when $2 \leq a < 3$, d $\leq$ 500 ppm; when $3 \leq a < 4$, d $\leq$ 1000 ppm; and when $4 \leq a \leq 6$, d $\leq$ 1500 ppm.

Optionally, if the d value meets the above conditions, the integrity and compactness of the coating layer of the coated lithium-rich metal oxide material are good, otherwise the integrity and compactness of the coating layer of the coated lithium-rich metal oxide material are poor.

In the present application, according to the different lithium contents of the inner core of the lithium-rich metal oxide, solvents with different water contents (deionized water, anhydrous ethanol or a mixed solution of the two at a specific ratio) are used to dissolve the free lithium in the coated lithium-rich metal oxide material and react with the dissolved free lithium, and the compactness and integrity of the coating layer are judged by testing the content of the dissolved free lithium in the coated lithium-rich metal oxide material, and the test results have a high accuracy, a good reliability and a fast detection speed; at the same time, the coating layer can be prevented from being damaged during the test.

In some embodiments, any commonly used titration method in the technical field can be selected for titration, optionally potentiometric titration.

In some embodiments, the mixing time is 1 min to 4 min, and optionally 1 min to 3 min, for example, 1 min, 2 min, 3 min, 4 min or a range formed by any two of the above values; and/or,

the mixing is carried out under the stirring condition of a rotation speed of 200 rpm to 800 rpm, and optionally 400 rpm to 800 rpm, for example, 200 rpm, 300 rpm, 400 rpm, 500 rpm, 600 rpm, 700 rpm, 800 rpm or a range formed by any two of the above values; and/or,

the test is carried out at 25°C.

The mixing time and stirring rotation speed in the above ranges can ensure that the dissolved lithium of the coated lithium-rich metal oxide material reacts fully and effectively with the solvent, which ensures the accuracy and reliability of the test results and can avoid damaging the coating layer.

In some embodiments, the content of the dissolved free lithium in the coated lithium-rich metal oxide material is tested by the following steps:

mixing the coated lithium-rich metal oxide material with a solvent at a mass ratio of 1 : 50 to 1 : 1 (optionally a mass ratio of 1 : 50 to 1 : 10), wherein the solvent is composed of water and ethanol, the mass content of water in the solvent is b, and b satisfies: when $2 \leq a < 3$, b = 100% - a × 10%; when $3 \leq a < 4$, b = 100% - a × 20%; and when $4 \leq a \leq 6$, b = 0;

separating the liquid phase substance in the obtained mixture, taking the liquid phase substance, and carrying out potentiometric titration with an ethanol solution of hydrochloric acid as a titrant, wherein the volumes of the consumed titrant corresponding to the two electric potential jump points in the titration process are $V_1$ mL and $V_2$ mL, respectively, and $V_2 > V_1$; and

calculating the content of the dissolved free lithium in the coated lithium-rich metal oxide material, i.e., the d value, according to the following formula;

$$d = C \times V_a \times (69.4684V_2 - 0.0424V_1) / (m \times V_b)$$

wherein,

m represents the mass of the coated lithium-rich metal oxide material, in g;
$V_a$ represents the volume of the solvent, in mL;
$V_b$ represents the volume of the taken liquid phase substance, in mL; and
C represents the concentration of hydrochloric acid in the titrant, in mol/L.

In some embodiments, in the process of potentiometric titration, a graph is plotted with the pH value in the titration process as an ordinate and the volume of the consumed titrant as an abscissa, wherein $V_1$ and $V_2$ refer to the volumes of the consumed titrant corresponding to the two electric potential jump points in the graph, and $V_2 > V_1$.

[Positive electrode plate]

The positive electrode plate usually comprises a positive electrode current collector and a positive electrode film layer provided on at least one surface of the positive electrode current collector, and the positive electrode film layer comprises a coated lithium-rich metal oxide material described above or a coated lithium-rich metal oxide material prepared by a method described above.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, tetrafluoroethylene-hexafluoropropylene copolymers, and fluorine-containing acrylate resins.

In some embodiments, the positive electrode film layer also optionally comprises a conductive agent. As an example, the conductive agent may comprise at least one of superconducting carbon, acetylene black, carbon black, Ketjen black, carbon dots, carbon nanotubes, graphene, and carbon nanofibers.

In some embodiments, the positive electrode plate can be prepared by dispersing the above components for preparing the positive electrode plate in a solvent (such as N-methylpyrrolidone) to form a positive electrode slurry; and coating the positive electrode current collector with the positive electrode slurry, followed by the procedures such as drying and cold pressing, so as to obtain the positive electrode plate.

[Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries, as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide, a silicon carbon composite, a silicon nitrogen composite, and a silicon alloy. The tin-based material may be selected from at least one of elemental tin, a tin oxide, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, Ketjen black, carbon dots, carbon nanotubes, graphene, and carbon nanofibers.

In some embodiments, the negative electrode film layer optionally further comprises other auxiliary agents, such as thickeners (e.g., sodium carboxymethyl cellulose (CMC-Na)), etc.

In some embodiments, the negative electrode plate can be prepared by dispersing the above-mentioned components for preparing the negative electrode plate, such as negative electrode active material, conductive agent, binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

[Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, the electrolyte is liquid and comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, an electrolyte solution further optionally comprises an additive. As an example, the additive may comprise a negative electrode film-forming additive and a positive electrode film-forming additive, and may further comprise an additive that may improve some properties of the battery, such as an additive that improves the overcharge property of the battery, or an additive that improves the high-temperature or low-temperature property of the battery.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

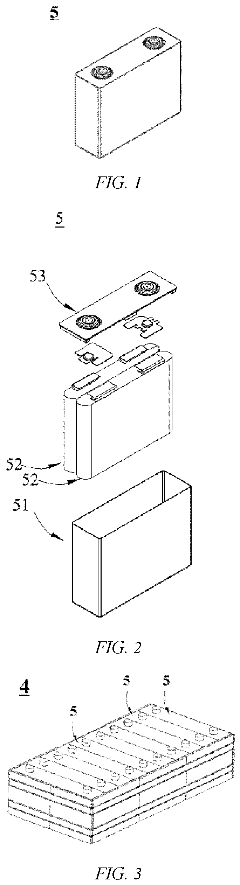

The shape of the secondary battery is not particularly limited in the present application and may be cylindrical, square or of any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

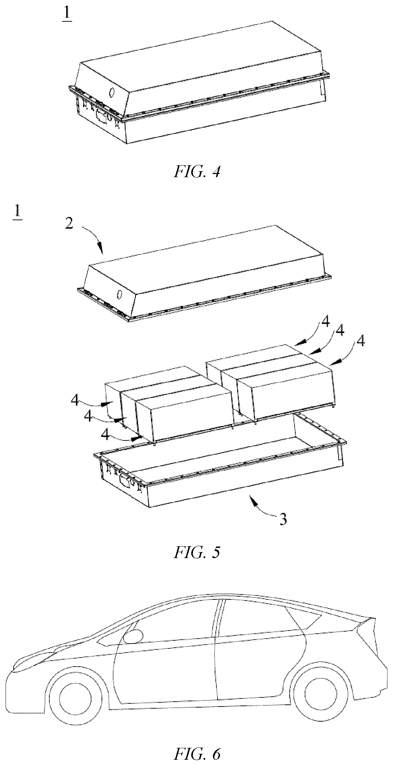

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

[Examples]

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

**Example 1**

1. Preparation of coated lithium-rich metal oxide material:

lithium hydroxide was mixed with ferric oxide, wherein the molar ratio of the lithium element in lithium hydroxide to the iron element in ferric oxide was 1.05 : 1, same was heated to 500°C in nitrogen for a primary sintering to obtain an intermediate product $LiFeO_2$, wherein the heating rate was 7°C/min and the sintering time was 5 h;
the intermediate product $LiFeO_2$ was air crushed, then put ina plasma enhanced chemical vapor deposition furnace for a coating treatment, and a raw material gas of ethylene was introduced into the furnace, wherein the gas flow rate is 400 sccm (standard ml/min), the temperature inside the furnace was 500°C, the gas pressure inside the furnace was 10 Pa, the deposition time was 6 h and the microwave power was 500 W. The organic gas was decomposed in the furnace and deposited to the surface of the intermediate product $LiFeO_2$ to obtain a carbon-coated $LiFeO_2$;
the carbon-coated $LiFeO_2$ was mixed with a lithium source (the lithium source was the same as above), wherein the molar ratio of the lithium element in the lithium source to $LiFeO_2$ was 4 : 1, same was heated to 600°C for a secondary sintering, wherein the heating rate was 5°C/min and the sintering time was 7 h. After sintering, same was crushed and sieved in a dry environment to obtain a carbon-coated $Li_5FeO_4$.

2. Preparation of positive electrode plate: the above coated lithium-rich metal oxide material, a binder of polyvinylidene fluoride (PVDF), a conductive agent of acetylene black were dissolved into a solvent of N-methylpyrrolidone (NMP) at a mass ratio of 97 : 2 : 1, and fully stirred and uniformly mixed to prepare a positive electrode slurry; the positive electrode slurry was uniformly coated onto a positive electrode current collector of aluminum foil, followed by drying, cold pressing and slitting to obtain a positive electrode plate.
3. Preparation of negative electrode plate: a negative electrode active material of artificial graphite, a conductive agent of acetylene black, a binder of styrene butadiene rubber (SBR) and a thickener of sodium carboxymethyl cellulose (CMC-Na) were dissolved in deionized water at a mass ratio of 96 : 1.5 : 1.5 : 1.0, and fully stirred and uniformly mixed to prepare a negative electrode slurry; the negative electrode slurry was coated onto a negative electrode current collector of copper foil, followed by drying, cold pressing and slitting to obtain a negative electrode plate.
4. Separator: a polypropylene film was used.
5. Preparation of electrolyte solution: ethylene carbonate (EC), ethyl methyl carbonate (EMC) and diethyl carbonate (DEC) were mixed at a volume ratio of 1 : 1 : 1, and LiPF6 was then uniformly dissolved in the above solution to obtain an electrolyte solution. In the electrolyte solution, the concentration of $LiPF_6$ is 1 mol/L.
6. Preparation of secondary battery: the above positive electrode plate, the separator and the negative electrode plate were stacked in sequence and wound to obtain an electrode assembly; the electrode assembly is placed into an outer package, the electrolyte solution prepared above was added, and a secondary battery is obtained after the procedures of packaging, standing, formation, aging, etc.

The preparation methods of the secondary batteries in Examples 2 to 33 and Comparative examples 1 to 19 were similar to those of Example 1, but the parameters and compositions were adjusted, and the different parameters were shown in Table 1 in details.

Table 1: Parameters of Examples 1 to 33 and Comparative examples 1 to 19

| New number | Coated lithium-rich metal oxide material | Preparation of intermediate product $LiMO_{y'}$ ($2 \leq y' \leq 3$) | | | | | | | Coating treatment | | | | | | | | | |
|---|---|---|---|---|---|---|---|---|---|---|---|---|---|---|---|---|---|
| | | Lithium source | Source of M | Molar ratio of lithium element in lithium source to M element in source of M | Temperature of primary sintering (°C) | Heating rate of primary sintering (°C/min) | Time of primary sintering (h) | Intermediate product $LiMO_{y'}$ | Raw material for coating | Microwave power (W) | Gas pressure inside furnace (Pa) | Temperature inside furnace (°C) | Gas flow rate (sccm) | Deposition time (h) | Molar ratio of lithium source to $LiMO_y$ | Temperature of secondary sintering (°C) | Heating rate of secondary sintering (°C/min) | Time of secondary sintering (h) |
| Example 1 | $Li_5FeO_4@C$ | LiOH | $Fe_2O_3$ | 1.05 : 1 | 500 | 7 | 5 | $LiFeO_2$ | Ethylene | 500 | 10 | 500 | 400 | 6 | 4 : 1 | 600 | 5 | 7 |
| Example 2 | $Li_5FeO_4@C$ | LiOH | $Fe_2O_3$ | 1.05 : 1 | 500 | 7 | 5 | $LiFeO_2$ | Ethylene | 800 | 10 | 500 | 400 | 6 | 4 : 1 | 600 | 5 | 7 |
| Example 3 | $Li_5Fe O_4@C$ | LiOH | $Fe_2O_3$ | 1.05 : 1 | 500 | 7 | 5 | $LiFeO_2$ | Ethylene | 100 0 | 10 | 500 | 400 | 6 | 4 : 1 | 600 | 5 | 7 |
| Example 4 | $Li_5FeO_4@C$ | LiOH | $Fe_2O_3$ | 1.05 : 1 | 500 | 7 | 5 | $LiFeO_2$ | Ethylene | 500 | 10 | 500 | 500 | 5 | 4 : 1 | 600 | 5 | 7 |
| Example 5 | $Li_5FeO_4@C$ | LiOH | $Fe_2O_3$ | 1.05 : 1 | 500 | 7 | 5 | $LiFeO_2$ | Ethylene | 500 | 10 | 500 | 400 | 6 | 4 : 1 | 600 | 5 | 7 |
| Example 6 | $Li_5FeO_4@C$ | $Li_2CO_3$ | $Fe_2O_3$ | 1.05 : 1 | 500 | 7 | 5 | $LiFeO_2$ | Ethylene | 500 | 10 | 500 | 400 | 6 | 4 : 1 | 650 | 5 | 6 |
| Example 7 | $Li_5FeO_4@C$ | $Li_2O$ | $Fe_2O_3$ | 1.05 : 1 | 500 | 7 | 5 | $LiFeO_2$ | Ethylene | 500 | 10 | 500 | 400 | 6 | 4 : 1 | 600 | 4 | 7 |
| Example 8 | $Li_5Fe O_4@C$ | $Li_2C_2O_4$ | $Fe_2O_3$ | 1.05 : 1 | 500 | 7 | 5 | $LiFeO_2$ | Ethylene | 500 | 10 | 500 | 400 | 6 | 4 : 1 | 600 | 6 | 7 |
| Example 9 | $Li_5FeO_4@C$ | LiOH | $Fe_2O_3$ | 1.05 : 1 | 500 | 6 | 5 | $LiFeO_2$ | Ethylene | 500 | 10 | 500 | 400 | 6 | 4 : 1 | 600 | 5 | 7 |
| Example 10 | $Li_5FeO_4@C$ | LiOH | $Fe_2O_3$ | 1.05 : 1 | 500 | 8 | 5 | $LiFeO_2$ | Ethylene | 500 | 10 | 500 | 400 | 6 | 4 : 1 | 600 | 5 | 7 |

| New number | Coated lithium-rich metal oxide material | Preparation of intermediate product LiMO$_{y'}$ (2 ≤ y' ≤ 3) | | | | | | | Coating treatment | | | | | | | | | |
|---|---|---|---|---|---|---|---|---|---|---|---|---|---|---|---|---|---|---|
| | | Lithium source | Source of M | Molar ratio of lithium element in lithium source to M element in source of M | Temperature of primary sintering (°C) | Heating rate of primary sintering (°C/min) | Time of primary sintering (h) | Intermediate product LiMO$_{y'}$ | Raw material for coating | Microwave power (W) | Gas pressure inside furnace (Pa) | Temperature inside furnace (°C) | Gas flow rate (sccm) | Deposition time (h) | Molar ratio of lithium source to LiMO$_y$ | Temperature of secondary sintering (°C) | Heating rate of secondary sintering (°C/min) | Time of secondary sintering (h) |
| Example 11 | Li$_5$FeO$_4$@C | LiOH | Fe$_2$O$_3$ | 1.05 : 1 | 500 | 7 | 4 | LiFeO$_2$ | Ethylene | 500 | 10 | 500 | 400 | 6 | 4 : 1 | 600 | 5 | 7 |
| Example 12 | Li$_5$FeO$_4$@C | LiOH | Fe$_2$O$_3$ | 1.05 : 1 | 500 | 7 | 6 | LiFeO$_2$ | Ethylene | 500 | 10 | 500 | 400 | 6 | 4 : 1 | 600 | 5 | 7 |
| Example 13 | Li$_5$Fe O$_4$@C | LiOH | Fe$_2$O$_3$ | 1.05 : 1 | 500 | 7 | 5 | LiFeO$_2$ | Acetylene | 500 | 10 | 500 | 400 | 6 | 4 : 1 | 600 | 5 | 7 |
| Example 14 | Li$_5$Fe O$_4$@C | LiOH | Fe$_2$O$_3$ | 1.05 : 1 | 500 | 7 | 5 | LiFeO$_2$ | Methane | 500 | 10 | 500 | 400 | 6 | 4 : 1 | 600 | 5 | 7 |
| Example 15 | Li$_5$FeO$_4$@C | LiOH | Fe$_2$O$_3$ | 1.05 : 1 | 500 | 7 | 5 | LiFeO$_2$ | Ethylene | 500 | 100 | 500 | 400 | 6 | 4 : 1 | 600 | 5 | 7 |
| Example 16 | Li$_5$FeO$_4$@C | LiOH | Fe$_2$O$_3$ | 1.05 : 1 | 450 | 7 | 5 | LiFeO$_2$ | Ethylene | 500 | 1000 | 500 | 400 | 6 | 4 : 1 | 600 | 5 | 7 |
| Example 17 | Li$_5$FeO$_4$@C | LiOH | Fe$_2$O$_3$ | 1.05 : 1 | 480 | 7 | 5 | LiFeO$_2$ | Ethylene | 500 | 10 | 400 | 400 | 6 | 4 : 1 | 600 | 5 | 7 |
| Example 18 | Li$_5$FeO$_4$@C | LiOH | Fe$_2$O$_3$ | 1.05 : 1 | 520 | 7 | 5 | LiFeO$_2$ | Ethylene | 500 | 10 | 450 | 400 | 6 | 4 : 1 | 600 | 5 | 7 |
| Example 19 | Li$_5$FeO$_4$@C | LiOH | Fe$_2$O$_3$ | 1.05 : 1 | 550 | 7 | 5 | LiFeO$_2$ | Ethylene | 500 | 10 | 550 | 400 | 6 | 4 : 1 | 600 | 5 | 7 |
| Example 20 | Li$_6$Co O$_4$@C | LiOH | Co$_3$O$_4$ | 1.05 : 1 | 510 | 7 | 5 | LiCoO$_2$ | Ethylene | 500 | 10 | 500 | 400 | 6 | 5 : 1 | 600 | 5 | 7 |

EP 4 478 456 A1

| New number | Coated lithium-rich metal oxide material | Preparation of intermediate product $LiMO_{y'}$ ($2 \leq y' \leq 3$) | | | | | | | Coating treatment | | | | | | | | | |
|---|---|---|---|---|---|---|---|---|---|---|---|---|---|---|---|---|---|---|
| | | Lithium source | Source of M | Molar ratio of lithium element in lithium source to M element in source of M | Temperature of primary sintering (°C) | Heating rate of primary sintering (°C/min) | Time of primary sintering (h) | Intermediate product $LiMO_{y'}$ | Raw material for coating | Microwave power (W) | Gas pressure inside furnace (Pa) | Temperature inside furnace (°C) | Gas flow rate (sccm) | Deposition time (h) | Molar ratio of lithium source to $LiMO_y$ | Temperature of secondary sintering (°C) | Heating rate of secondary sintering (°C/min) | Time of secondary sintering (h) |
| Example 21 | $Li_2CuO_2@C$ | LiOH | CuO | 1.05 : 1 | 480 | 7 | 5 | $LiCuO_2$ | Ethylene | 500 | 10 | 500 | 400 | 6 | 1 : 1 | 600 | 5 | 7 |
| Example 22 | $Li_2NiO_2@C$ | LiOH | NiO | 1.05 : 1 | 520 | 7 | 5 | $LiNiO_2$ | Ethylene | 500 | 10 | 500 | 400 | 6 | 1 : 1 | 600 | 5 | 7 |
| Example 23 | $Li_3NbO_4@C$ | LiOH | $Nb_2O_5$ | 1.05 : 1 | 525 | 7 | 5 | $LiNbO_3$ | Ethylene | 500 | 10 | 500 | 400 | 6 | 2 : 1 | 600 | 5 | 7 |
| Example 24 | $Li_5FeO_4@Al_2O_3$ | LiOH | $Fe_2O_3$ | 1.05 : 1 | 500 | 7 | 5 | $LiFeO_2$ | Aluminum isopropoxide | 600 | 10 | 520 | 400 | 6 | 4 : 1 | 600 | 5 | 7 |
| Example 25 | $Li_5FeO_4@TiO_2$ | LiOH | $Fe_2O_3$ | 1.05 : 1 | 500 | 7 | 5 | $LiFeO_2$ | Tetrabutyl titanate | 610 | 10 | 520 | 400 | 6 | 4 : 1 | 600 | 5 | 7 |
| Example 26 | $Li_5FeO_4@SiO_2$ | LiOH | $Fe_2O_3$ | 1.05 : 1 | 500 | 7 | 5 | $LiFeO_2$ | Ethyl ortho silicate | 620 | 10 | 520 | 400 | 6 | 4 : 1 | 600 | 5 | 7 |
| Example 27 | Same as Example 1 | | | | | | | | Same as Example 1 | | | | | | | | | |
| Example 28 | Same as Example 1 | | | | | | | | Same as Example 1 | | | | | | | | | |

EP 4 478 456 A1

19

| New number | Coate d lithiu m-rich metal oxide materi al | Preparation of intermediate product LiMO$_{y'}$ (2 ≤ y' ≤ 3) | | | | | | | Coating treatment | | | | | | | | | |
|---|---|---|---|---|---|---|---|---|---|---|---|---|---|---|---|---|---|---|
| | | Lithium source | Sourc e of M | Molar ratio of lithium element in lithium source to M element in source of M | Tern perat ure of prim ary sinte ring (°C) | Heat ing rate of prim ary sinte ring (°C/ min) | Tim e of prim ary sinte ring (h) | Interme diate product LiMO$_{y'}$ | Raw mate rial for coati ng | Mic row ave po wer (W) | Gas pressu re inside furnac e (Pa) | Tempe rature inside furnac e (°C) | Gas flow rate (scc m) | Dep ositi on time (h) | Mol ar ratio of lithi um sour ce to LiM O$_y$ | Temp eratur e of secon dary sinteri ng (°C) | Heati ng rate of seco ndar y sinter ing (°C/ min) | Time of seco ndar y sinter ing (h) |
| Example 29 | Same as Example 1 | | | | | | | | Same as Example 1 | | | | | | | | | |
| Example 30 | Li$_5$FeO$_4$@C | LiOH | Fe$_2$O$_3$ | 1.05 : 1 | 500 | 7 | 5 | LiFeO$_2$ | Ethyl ene | 200 | 10 | 500 | 400 | 6 | 4 : 1 | 600 | 5 | 7 |
| Example 31 | Li$_5$FeO$_4$@C | LiOH | Fe$_2$O$_3$ | 1.05 : 1 | 500 | 7 | 5 | LiFeO$_2$ | Ethyl ene | 500 | 10 | 500 | 200 | 8 | 4 : 1 | 600 | 5 | 7 |
| Example 32 | Li$_5$Fe O$_4$@C | LiOH | Fe$_2$O$_3$ | 1.05 : 1 | 500 | 7 | 5 | LiFeO$_2$ | Ethyl ene | 500 | 10 | 500 | 400 | 6 | 4 : 1 | 550 | 5 | 8 |
| Example 33 | Li$_5$FeO$_4$@C | LiOH | Fe$_2$O$_3$ | 1.05 : 1 | 500 | 7 | 5 | LiFeO$_2$ | Ethyl ene | 500 | -10 | 500 | 400 | 6 | 4 : 1 | 600 | 5 | 7 |
| Comparativ e example 1 | Li$_5$Fe O$_4$ | LiOH | Fe$_2$O$_3$ | 1.02 : 0.5 | 500 | 7 | 5 | LiFeO$_2$ | / | / | / | / | / | / | 4 : 1 | 600 | 5 | 7 |
| Comparativ e example 2 | Li$_5$Fe O$_4$/C | LiOH | Fe$_2$O$_3$ | 1.02 : 0.5 | 500 | 7 | 5 | LiFeO$_2$ | Ketje n black | / | / | / | / | / | 4 : 1 | 600 | 5 | 7 |
| Comparativ e example 3 | Li$_5$Fe O$_4$/Al$_2$ O$_3$ | LiOH | Fe$_2$O$_3$ | 1.02 : 0.5 | 500 | 7 | 5 | LiFeO$_2$ | Alu minu m oxide | / | / | / | / | / | 4 : 1 | 600 | 5 | 7 |
| Comparativ e example 4 | Li$_5$Fe O$_4$/Ti O2 | LiOH | Fe$_2$O$_3$ | 1.02 : 0.5 | 500 | 7 | 5 | LiFeO$_2$ | Titan ium dioxi de | / | / | / | / | / | 4 : 1 | 600 | 5 | 7 |

(continued)

| New number | Coated lithium-rich metal oxide material | Preparation of intermediate product $LiMO_{y'}$ $(2 \le y' \le 3)$ | | | | | | | Coating treatment | | | | | | | | | |
|---|---|---|---|---|---|---|---|---|---|---|---|---|---|---|---|---|---|---|
| | | Lithium source | Source of M | Molar ratio of lithium element in lithium source to M element in source of M | Temperature of primary sintering (°C) | Heating rate of primary sintering (°C/min) | Time of primary sintering (h) | Intermediate product $LiMO_{y'}$ | Raw material for coating | Microwave power (W) | Gas pressure inside furnace (Pa) | Temperature inside furnace (°C) | Gas flow rate (sccm) | Deposition time (h) | Molar ratio of lithium source to $LiMO_y$ | Temperature of secondary sintering (°C) | Heating rate of secondary sintering (°C/min) | Time of secondary sintering (h) |
| Comparative example 5 | $Li_5FeO_4/SiO_2$ | LiOH | $Fe_2O_3$ | 1.02 : 0.5 | 500 | 7 | 5 | $LiFeO_2$ | Silica | / | / | / | / | / | 4 : 1 | 600 | 5 | 7 |
| Comparative example 6 | $Li_5FeO_4@C$ | LiOH | $Fe_2O_3$ | 1.05 : 1 | 500 | 7 | 5 | $LiFeO_2$ | Ethylene | 100 | 10 | 500 | 400 | 6 | 4 : 1 | 600 | 5 | 7 |
| Comparative example 7 | $Li_5FeO_4@C$ | LiOH | $Fe_2O_3$ | 1.05 : 1 | 500 | 7 | 5 | $LiFeO_2$ | Ethylene | 500 | -100 | 500 | 400 | 6 | 4 : 1 | 600 | 5 | 7 |
| Comparative example 8 | $Li_5FeO_4@C$ | LiOH | $Fe_2O_3$ | 1.09 : 1 | 500 | 7 | 5 | $LiFeO_2$ | Ethylene | 500 | -200 | 700 | 400 | 6 | 4 : 1 | 600 | 5 | 7 |
| Comparative example 9 | Same as Comparative example 1 | | | | | | | | Same as Comparative example 1 | | | | | | | | | |
| Comparative example 10 | Same as Comparative example 2 | | | | | | | | Same as Comparative example 2 | | | | | | | | | |
| Comparative example 11 | Same as Example 1 | | | | | | | | Same as Example 1 | | | | | | | | | |
| Comparative example 12 | Same as Example 37 | | | | | | | | Same as Example 37 | | | | | | | | | |
| Comparative example 13 | Same as Example 38 | | | | | | | | Same as Example 38 | | | | | | | | | |

| New number | Coated lithium-rich metal oxide material | Preparation of intermediate product LiMO$_{y'}$ (2 ≤ y' ≤ 3) | | | | | | | Coating treatment | | | | | | | | | |
|---|---|---|---|---|---|---|---|---|---|---|---|---|---|---|---|---|---|---|
| | | Lithium source | Source of M | Molar ratio of lithium element in lithium source to M element in source of M | Temperature of primary sintering (°C) | Heating rate of primary sintering (°C/min) | Time of primary sintering (h) | Intermediate product LiMO$_{y'}$ | Raw material for coating | Microwave power (W) | Gas pressure inside furnace (Pa) | Temperature inside furnace (°C) | Gas flow rate (sccm) | Deposition time (h) | Molar ratio of lithium source to LiMO$_y$ | Temperature of secondary sintering (°C) | Heating rate of secondary sintering (°C/min) | Time of secondary sintering (h) |
| Comparative example 14 | | Same as Example 39 | | | | | | | Same as Example 39 | | | | | | | | | |
| Comparative example 15 | | Same as Example 13 | | | | | | | Same as Example 13 | | | | | | | | | |
| Comparative example 16 | | Same as Example 14 | | | | | | | Same as Example 14 | | | | | | | | | |
| Comparative example 17 | | Same as Example 1 | | | | | | | Same as Example 1 | | | | | | | | | |
| Comparative example 18 | | Same as Example 1 | | | | | | | Same as Example 1 | | | | | | | | | |
| Comparative example 19 | | Same as Example 1 | | | | | | | Same as Example 1 | | | | | | | | | |

**Performance test**

(1) Test of content of coating layer in coated lithium-rich metal oxide material:

if the coating layer was carbon, the content of the coating layer in the coated lithium-rich metal oxide material was measured by using a high-frequency infrared carbon and sulfur analyzer (C content analyzer, model HCS-140, Shanghai Dekai Instrument Co., Ltd.) according to GBT20123-2006 "Determination of Total Carbon and Sulfur Content in Iron and Steel by Infrared Absorption Method after Combustion in High-frequency Induction Furnace (a conventional method)".

If the coating layer is an oxide $M_xO_y$, the content of the coating layer was tested by using an inductively coupled plasma atomic emission spectrometer (model ICAP7400, Thermo Fisher Scientific, USA) according to ICP (inductively coupled plasma) atomic emission spectrometry, specifically:

adding the coated lithium-rich metal oxide material into aqua regia and digesting same under mechanical stirring for 30 min; adding the digested solution into a ICAP7400 spectrometer, quantitatively analyzing the chemical composition elements in the coated lithium-rich metal oxide material, testing the mass fraction p of the M element, and calculating the content of the coating layer according to the following formula:

$$\text{content of coating layer} = 100\% \times (n \times p)/m,$$

wherein n represents the relative molecular mass of $M_xO_y$, and m represents the relative atomic mass of M.

(2) Test of particle size Dv50 of coated lithium-rich metal oxide material:

it was measured with a laser particle size analyzer (Mastersizer 2000E, Malvern Panaco), with reference to GB/T 19077-2016 Particle Size Distribution - Laser Diffraction Method.

Dv50 could be adjusted by controlling the degree of crushing and sieving of the coated lithium-rich metal oxide material.

(3) Test of mass content of water in coated lithium-rich metal oxide material:

a Karl Fischer moisture tester (Model 831, Metrohm, Switzerland) was used, 10 g of the coated lithium-rich metal oxide material was heated in a full-automatic Karl Fischer sample heater (Model 874, Metrohm, Switzerland) that comes with the above tester at 170°C, purged with dry nitrogen gas at a flow rate of 40 mL/min, and titrated for 400 s.

The mass content of water could be adjusted by crushing and sieving the coated lithium-rich metal oxide material under different humidity environments.

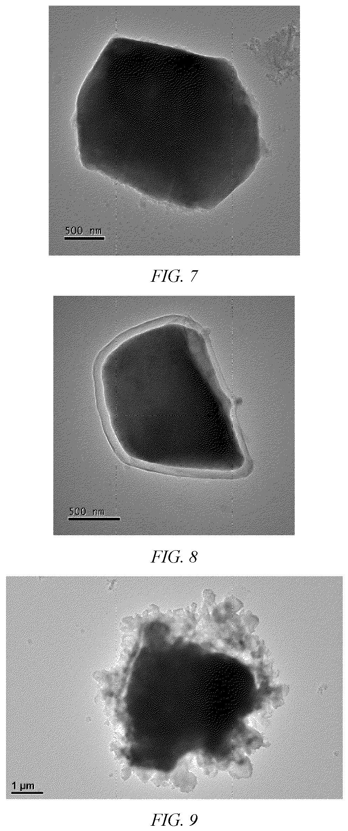

(4) The TEM photographs of the lithium-rich metal oxide material of Comparative example 1, and the coated lithium-rich metal oxide materials of Example 1 and Comparative example 2 were shown in Figs. 7 to 9, respectively.

(5) Test of first-circle charge gram capacity of secondary battery:

an assembled secondary battery was charged to 4.25 V at a constant current rate of 0.1 C and left to stand for 5 min, and the first-circle charge capacity of the secondary battery at this time was recorded; the first-circle charge gram capacity of the secondary battery was obtained by dividing the first-circle charge capacity of the battery by the mass of the coated lithium-rich metal oxide material used.

(6) Test of powder resistivity of coated lithium-rich metal oxide material:

a powder of the coated lithium-rich metal oxide material was dried, and an appropriate amount of the powder was weighted, and then the powder resistivity of the sample was tested by using a powder resistivity tester (ST2722 model digital four-probe instrument, Suzhou Jingge Electronics Co., Ltd.) according to GB/T 30835- 2014 "Carbon Composite Lithium Iron Phosphate Positive Electrode Material for Lithium-ion Batteries", and the test pressure was 20 MPa.

(7) Stability test of coated lithium-rich metal oxide material:

s (g) of the coated lithium-rich metal oxide material was placed in a constant temperature (25°C) and constant humidity (40% relative humidity) environment for 7 days, then the sample was weighted to obtain the mass t (g), and the weight growth rate w was calculated according to the following formula;

$$\text{weight growth rate w} = 100\% \times (t - s)/t$$

when $w \leq 0.5\%$, it indicated that the integrity and compactness of the coating layer were excellent; when $0.5\% < w < 0.8\%$, it indicated that the integrity and compactness of the coating layer were good; and when $w \geq 0.8\%$, it indicated that the integrity and compactness of the coating layer were poor.

(8) Test of integrity and compactness of coating layer of coated lithium-rich metal oxide material:
at 25°C, m (g) of the coated lithium-rich metal oxide material was taken in a beaker, and $V_a$(mL) of a mixed solvent of deionized water and absolute ethanol was added, wherein the mass ratio of deionized water in the mixed solvent was b, and b satisfied:

when

$$2 \leq a < 3, b = 100\% - a \times 10\%;$$

when

$$3 \leq a < 4, b = 100\% - a \times 20\%;$$

and

when

$$4 \leq a \leq 6, b = 0;$$

after sealing with a sealing film, the above mixed system was stirred at a rotation speed of 600 rpm for 3 min, and after standing, it was subjected to suction filtration with a vacuum filtration device, and $V_b$(mL) of a filtrate was taken and titrated with an ethanol solution of hydrochloric acid (the concentration of hydrochloric acid is C mol/L) as a titrant; an automatic potentiometric titrator was turned on to carry out the titration with the pH value as an ordinate and the volume of the consumed titrant as an abscissa, the electrode potential jump points $EP_1$ and $EP_2$ were recorded, and the volume of the consumed titrant corresponding to the two jump points was $V_1$(mL) and $V_2$ (mL) ($V_2 > V_1$), respectively; wherein,

when the titration reaction proceeded to the electric potential jump point $EP_1$, the following chemical reactions occurred:

$$LiOH + HCl \rightarrow LiCl + H_2O$$

$$Li_2CO_3 + HCl \rightarrow LiCl + LiHCO_3$$

when the titration reaction proceeded to the electric potential jump point $EP_2$, the following chemical reaction occurred:

$$LiHCO_3 + HCl \rightarrow LiCl + H_2O + CO_2$$

the content d (ppm) of the dissolved free lithium in m (g) of the coated lithium-rich metal oxide material was calculated according to the following formula:

$$d = C \times V_a \times (69.4684V_2 - 0.0424V_1) / (m \times V_b)$$

if the d value satisfied the following conditions, the integrity and compactness of the coating layer were good, otherwise the integrity and compactness of the coating layer were poor:

when

$$2 \leq a < 3, d \leq 500 \text{ ppm};$$

when

$$3 \leq a < 4, d \leq 1000 \text{ ppm};$$

and

when

$$4 \leq a \leq 6, d \leq 1500 \text{ ppm}$$

The above results are shown in Table 2.

Table 2: Test results of Examples 1 to 33 and Comparative examples 1 to 19

| New number | Content of coating layer substance (wt%) | First-cycle charge gram capacity (mAh/g) | Resistivity of powder (Ω•cm) | Water content (ppm) | Dv50 (μm) | Stability test | | Test of integrity and compactness of coating layer | | | | | | |
|---|---|---|---|---|---|---|---|---|---|---|---|---|---|---|
| | | | | | | Weight growth rate | Results of integrity and compactness of coating layer | a value | b value | Mass ratio of coated lithium-rich metal oxide material to solvent | Stirring time (min) | Stirring rotation speed (rpm) | d value (ppm) | Results of integrity and compactness of coating layer |
| Example 1 | 5.0 | 682 | 0.534 | 100 | 6 | 0.45% | Excellent | 5 | 0% | 1 : 50 | 3 | 600 | 1316 | Good |
| Example 2 | 7.0 | 663 | 1.433 | 100 | 6 | 0.36% | Excellent | 5 | 0% | 1 : 50 | 3 | 600 | 1122 | Good |
| Example 3 | 10.0 | 624 | 3.239 | 100 | 6 | 0.28% | Excellent | 5 | 0% | 1 : 50 | 3 | 600 | 926 | Good |
| Example 4 | 5.0 | 678 | 0.762 | 200 | 6 | 0.47% | Excellent | 5 | 0% | 1 : 50 | 3 | 600 | 1425 | Good |
| Example 5 | 5.0 | 673 | 1.105 | 300 | 6 | 0.49% | Excellent | 5 | 0% | 1 : 50 | 3 | 600 | 1487 | Good |
| Example 6 | 5.0 | 681 | 0.588 | 100 | 4 | 0.48% | Excellent | 5 | 0% | 1 : 50 | 3 | 600 | 1454 | Good |
| Example 7 | 5.0 | 675 | 0.891 | 100 | 8 | 0.41% | Excellent | 5 | 0% | 1 : 50 | 3 | 600 | 1245 | Good |
| Example 8 | 5.0 | 671 | 1.108 | 100 | 10 | 0.35% | Excellent | 5 | 0% | 1 : 50 | 3 | 600 | 1119 | Good |
| Example 9 | 5.0 | 682 | 0.534 | 100 | 6 | 0.45% | Excellent | - | | | | | | |
| Example 10 | 5.0 | 682 | 0.534 | 100 | 6 | 0.45% | Excellent | - | | | | | | |
| Example 11 | 5.0 | 682 | 0.534 | 100 | 6 | 0.45% | Excellent | 5 | 0% | 1 : 10 | 3 | 600 | 1028 | Good |
| Example 12 | 5.0 | 682 | 0.534 | 100 | 6 | 0.45% | Excellent | 5 | 0% | 1 : 1 | 3 | 600 | 826 | Good |
| Example 13 | 5.0 | 682 | 0.534 | 100 | 6 | 0.45% | Excellent | 5 | 0% | 1 : 50 | 3 | 400 | 1247 | Good |
| Example 14 | 5.0 | 682 | 0.534 | 100 | 6 | 0.45% | Excellent | 5 | 0% | 1 : 50 | 3 | 800 | 1421 | Good |
| Example 15 | 6.9 | 657 | 1.842 | 100 | 6 | 0.40% | Excellent | 5 | 0% | 1 : 50 | 3 | 600 | 1215 | Good |
| Example 16 | 8.6 | 638 | 2.215 | 100 | 6 | 0.32% | Excellent | 5 | 0% | 1 : 50 | 3 | 600 | 996 | Good |
| Example 17 | 1.3 | 629 | 3.089 | 100 | 6 | 0.48% | Excellent | 5 | 0% | 1 : 50 | 3 | 600 | 1454 | Good |
| Example 18 | 2.7 | 658 | 1.810 | 100 | 6 | 0.41% | Excellent | 5 | 0% | 1 : 50 | 3 | 600 | 1245 | Good |
| Example 19 | 7.4 | 662 | 1.436 | 100 | 6 | 0.32% | Excellent | 5 | 0% | 1 : 50 | 3 | 600 | 1101 | Good |

EP 4 478 456 A1

(continued)

| New number | Content of coating layer substance (wt%) | First-cycle charge gram capacity (mAh/g) | Resistivity of powder (Ω·cm) | Water content (ppm) | Dv50 (μm) | Stability test — Weight growth rate | Stability test — Results of integrity and compactness of coating layer | a value | b value | Mass ratio of coated lithium-rich metal oxide material to solvent | Stirring time (min) | Stirring rotation speed (rpm) | d value (ppm) | Results of integrity and compactness of coating layer |
|---|---|---|---|---|---|---|---|---|---|---|---|---|---|---|
| Example 20 | 5.0 | 380 | 0.42 | 100 | 6 | 0.32% | Excellent | 6 | 0% | 1 : 50 | 3 | 600 | 1409 | Good |
| Example 21 | 5.0 | 418 | 0.545 | 100 | 6 | 0.30% | Excellent | 2 | 80% | 1 : 50 | 3 | 600 | 465 | Good |
| Example 22 | 5.0 | 420 | 0.541 | 100 | 6 | 0.47% | Excellent | 2 | 80% | 1 : 50 | 3 | 600 | 413 | Good |
| Example 23 | 5.0 | 388 | 0.568 | 100 | 6 | 0.21% | Excellent | 3 | 40% | 1 : 50 | 3 | 600 | 662 | Good |
| Example 24 | 6.2 | 662 | 1.415 | 100 | 6 | 0.46% | Excellent | 5 | 0% | 1 : 50 | 3 | 600 | 1401 | Good |
| Example 25 | 6.3 | 661 | 1.423 | 100 | 6 | 0.44% | Excellent | 5 | 0% | 1 : 50 | 3 | 600 | 1386 | Good |
| Example 26 | 6.2 | 658 | 1.457 | 100 | 6 | 0.45% | Excellent | 5 | 0% | 1 : 50 | 3 | 600 | 1397 | Good |
| Example 27 | | | Same as Example 1 | | | 0.45% | Excellent | 5 | 0% | 1 : 50 | 1 | 600 | 1027 | Good |
| Example 28 | | | Same as Example 1 | | | 0.45% | Excellent | 5 | 0% | 1 : 50 | 2 | 600 | 1185 | Good |
| Example 29 | | | Same as Example 1 | | | 0.45% | Excellent | 5 | 0% | 1 : 50 | 3 | 200 | 1135 | Good |
| Example 30 | 3.0 | 661 | 1.452 | 100 | 6 | 0.54% | Better | 5 | 0% | 1 : 50 | 3 | 600 | 1612 | Poor |
| Example 31 | 5.0 | 668 | 1.198 | 500 | 6 | 0.56% | Better | 5 | 0% | 1 : 50 | 3 | 600 | 1665 | Poor |
| Example 32 | 5.0 | 679 | 0.624 | 100 | 2 | 0.51% | Better | 5 | 0% | 1 : 50 | 3 | 600 | 1521 | Poor |
| Example 33 | 2.4 | 654 | 1.876 | 100 | 6 | 0.73% | Better | 5 | 0% | 1 : 50 | 3 | 600 | 1894 | Poor |
| Comparative example 1 | / | 501 | 105652.212 | 100 | 6 | 10.23% | Worse | 5 | 0% | 1 : 50 | 3 | 600 | 21678 | Poor |
| Comparative example 2 | 5.0 | 522 | 523.861 | 100 | 6 | 5.68% | Worse | 5 | 0% | 1 : 50 | 3 | 600 | 11271 | Poor |
| Comparative example 3 | 5.0 | 554 | 785.453 | 100 | 6 | 7.32% | Worse | 5 | 0% | 1 : 50 | 3 | 600 | 18750 | Poor |

| New number | Content of coating layer substance (wt%) | First-cycle charge gram capacity (mAh/g) | Resistivity of powder (Ω·cm) | Water content (ppm) | Dv50 (μm) | Stability test | | Test of integrity and compactness of coating layer | | | | | | |
|---|---|---|---|---|---|---|---|---|---|---|---|---|---|---|
| | | | | | | Weight growth rate | Results of integrity and compactness of coating layer | a value | b value | Mass ratio of coated lithium-rich metal oxide material to solvent | Stirring time (min) | Stirring rotation speed (rpm) | d value (ppm) | Results of integrity and compactness of coating layer |
| Comparative example 4 | 5.0 | 552 | 780.393 | 100 | 6 | 7.45% | Worse | 5 | 0% | 1 : 50 | 3 | 600 | 19322 | Poor |
| Comparative example 5 | 5.0 | 549 | 796.256 | 100 | 6 | 7.56% | Worse | 5 | 0% | 1 : 50 | 3 | 600 | 19476 | Poor |
| Comparative example 6 | 1.0 | 625 | 3.231 | 100 | 6 | 1.15% | Worse | 5 | 0% | 1 : 50 | 3 | 600 | 3320 | Poor |
| Comparative example 7 | 0.8 | 615 | 4.112 | 100 | 6 | 3.26% | Worse | 5 | 0% | 1 : 50 | 3 | 600 | 4451 | Poor |
| Comparative example 8 | 0.2 | 595 | 10.321 | 100 | 6 | 5.61% | Worse | 5 | 0% | 1 : 50 | 3 | 600 | 9386 | Poor |
| Comparative example 9 | Same as Comparative example 1 | | | | | 10.23% | Worse | 5 | 100% | 1 : 50 | 3 | 600 | 192568 | Poor |
| Comparative example 10 | Same as Comparative example 2 | 5.68% | Worse | 5 | 100% | 1 : 50 | 3 | 600 | 173200 | Poor | | | | |
| Comparative example 11 | Same as Example 1 | 0.45% | Excellent | 5 | 100% | 1 : 50 | 3 | 600 | 6380 | Poor | | | | |
| Comparative example 12 | Same as Example 37 | 0.46% | Excellent | 5 | 100% | 1 : 50 | 3 | 600 | 198754 | Poor | | | | |
| Comparative example 13 | Same as Example 38 | 0.44% | Excellent | 5 | 100% | 1 : 50 | 3 | 600 | 193221 | Poor | | | | |

EP 4 478 456 A1

| New number | Content of coating layer substance (wt%) | First-cycle charge gram capacity (mAh/g) | Resistivity of powder (Ω•cm) | Water content (ppm) | Dv50 (μm) | Stability test | | Test of integrity and compactness of coating layer | | | | | | |
|---|---|---|---|---|---|---|---|---|---|---|---|---|---|---|
| | | | | | | Weight growth rate | Results of integrity and compactness of coating layer | a value | b value | Mass ratio of coated lithium-rich metal oxide material to solvent | Stirring time (min) | Stirring rotation speed (rpm) | d value (ppm) | Results of integrity and compactness of coating layer |
| Comparative example 14 | Same as Example 39 | 0.45% | Excellent | 5 | 100% | 1 : 50 | 3 | 600 | 194570 | Poor | | | | |
| Comparative example 15 | Same as Example 13 | 0.45% | Excellent | 5 | 0% | 1 : 200 | 3 | 600 | 4340 | Poor | | | | |
| Comparative example 16 | Same as Example 14 | 0.45% | Excellent | 5 | 0% | 1 : 100 | 3 | 600 | 1813 | Poor | | | | |
| Comparative example 17 | Same as Example 1 | 0.45% | Excellent | 5 | 0% | 1 : 50 | 5 | 600 | 1565 | Poor | | | | |
| Comparative example 18 | Same as Example 1 | 0.45% | Excellent | 5 | 0% | 1 : 50 | 15 | 600 | 2632 | Poor | | | | |
| Comparative example 19 | Same as Example 1 | 0.45% | Excellent | 5 | 0% | 1 : 50 | 3 | 1000 | 1654 | Poor | | | | |

It can be seen from Tables 1-2 that:
compared with Comparative examples 1-8, the coating layer in the coated lithium-rich metal oxide material of the present application had higher integrity and compactness; wherein the integrity and compactness of the coating layers in the coated lithium-rich metal oxide materials in Examples 1-29 of the present application were further improved. Compared with Comparative examples 6-8, the content of the coating layer substance in the coated lithium-rich metal oxide material of the present application was higher.

Compared with Comparative examples 1-2, the powder resistivity of the coated lithium-rich metal oxide materials of Examples 1-5 and 13-15 of the present application was lower, and the first-cycle charge gram capacity of the secondary batteries was higher.

Compared with Comparative examples 3-5, the powder resistivity of the coated lithium-rich metal oxide materials of Examples 24-26 of the present application was lower, and the first-cycle charge gram capacity of the secondary batteries was higher.

Compared with Comparative examples 6-8, the powder resistivity of the coated lithium-rich metal oxide materials prepared in Examples 1-2, 5, 15, 30 and 33 of the present application with a microwave power of 200 to 1000 W and a gas pressure inside a furnace of -10 to 1000 Pa was lower and the first-cycle charge gram capacity of the secondary batteries was higher.

In Comparative examples 9-14, deionized water was used as a solvent (b = 100%) to test the integrity and compactness of the coating layer, and the results were quite different from those of the stability test. In contrast, the results of testing the integrity and compactness of the coating layer with appropriate solvents in Comparative examples 1-2 and Examples 1 and 37-39 of the present application were consistent with the results of the stability test.

In Comparative examples 15-19, the results of the integrity and compactness of the coating layers tested by using too low ratios of coated lithium-rich metal oxide materials to solvents were quite different from the results of the stability test. In contrast, the results of the integrity and compactness of the coating layer tested by using appropriate ratios of coated lithium-rich metal oxide materials to solvents in Examples 1 and 13-14 were consistent with the results of the stability test.

The above showed that the integrity and compactness of the coating layer in the coated lithium-rich metal oxide material of the present application were better, the powder resistivity was lower, the conductivity was better, and the content of the coating layer substance was higher and first-cycle charge gram capacity of the second battery was higher.

Since the stability test was an existing method, the results of the method of the present application for testing the integrity and compactness of the coating layer in the coated lithium-rich metal oxide material were consistent with the results of the stability test, which indicated that the accuracy of the test method of the present application was high.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that are made to the embodiments and are conceivable to those skilled in the art, and other modes constructed by combining some of the constituent elements of the embodiments also fall within the scope of the present application.

**Claims**

1. A coated lithium-rich metal oxide material, which comprises an inner core and a coating layer coating the inner core;

   the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$;
   the coating layer comprises one or more of carbon, silicon oxides and metal oxides; the weight growth rate of the coated lithium-rich metal oxide material after standing for 144 to 192 h in an environment at 25°C and a relative humidity of 40% is w, wherein the w < 0.8%, and
   optionally, the w $\leq$ 0.5%.

2. A coated lithium-rich metal oxide material, which comprises an inner core and a coating layer coating the inner core;

   the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$;
   the coating layer comprises one or more of carbon, silicon oxides and metal oxides;
   and a d value of the coated lithium-rich metal oxide material satisfies:

   when

$$2 \leq a < 3, d \leq 500 \text{ ppm};$$

when

$$3 \leq a < 4, d \leq 1000 \text{ ppm};$$

and
when

$$4 \leq a \leq 6, d \leq 1500 \text{ ppm};$$

wherein the d value of the coated lithium-rich metal oxide material is tested by the following steps:

mixing the coated lithium-rich metal oxide material with a solvent at a mass ratio of 1 : 50 to 1 : 1, wherein the solvent is composed of water and ethanol, the mass content of the water in the solvent is b, and b satisfies:

when

$$2 \leq a < 3, b = 100\% - a \times 10\%;$$

when

$$3 \leq a < 4, b = 100\% - a \times 20\%;$$

and
when

$$4 \leq a \leq 6, b = 0;$$

separating a liquid phase substance in the obtained mixture, carrying out potentiometric titration on the liquid phase substance to calculate the content of the dissolved free lithium in the coated lithium-rich metal oxide material, i.e., the d value of the coated lithium-rich metal oxide material.

3. The coated lithium-rich metal oxide material according to claim 1 or 2, wherein the M comprises one or more elements of Ni, Co, Fe, Mn, Cu, V and Nb, and optionally one or more elements of Ni, Co, Fe, Cu and Nb.

4. The coated lithium-rich metal oxide material according to any one of claims 1 to 3, wherein the inner core comprises one or more of $Li_2NiO_2$, $Li_2CuO_2$, $Li_2MnO_3$, $Li_3VO_4$, $Li_3NbO_4$, $Li_5FeO_4$ and $Li_6CoO_4$, and optionally one or more of $Li_2NiO_2$, $Li_2CuO_2$, $Li_3NbO_4$, $Li_5FeO_4$ and $Li_6CoO_4$.

5. The coated lithium-rich metal oxide material according to any one of claims 1 to 4, wherein the coating layer comprises one or more of carbon, silicon dioxide, aluminum oxide and titanium oxide.

6. The coated lithium-rich metal oxide material according to any one of claims 1 to 5, wherein the mass content of the coating layer in the coated lithium-rich metal oxide material is 1.3% to 10%, and optionally 3% to 7%.

7. The coated lithium-rich metal oxide material according to any one of claims 1 to 6, wherein the particle size $D_v50$ of the coated lithium-rich metal oxide material is 2 to 10 $\mu$m, optionally 4 to 10 $\mu$m, and more optionally 4 to 8 $\mu$m.

8. The coated lithium-rich metal oxide material according to any one of claims 1 to 7, wherein the mass content of water in the coated lithium-rich metal oxide material is $\leq$ 1000 ppm, optionally $\leq$ 500 ppm, more optionally $\leq$ 300 ppm, and further optionally $\leq$ 200 ppm.

9. The coated lithium-rich metal oxide material according to any one of claims 1 to 8, wherein the powder resistivity of the coated lithium-rich metal oxide material is < 4 $\Omega \cdot$ cm as tested under a pressure of 20 MPa, and optionally $\leq 3.3\,\Omega \cdot$ cm.

10. A method for preparing a coated lithium-rich metal oxide material, including the following steps:

   providing a compound $Li_zMO_{y'}$, wherein $0.98 \leq z \leq 1.02$, and $2 \leq y' \leq 3$;
   coating $Li_zMO_{y'}$ by a plasma enhanced chemical vapor deposition method; and
   mixing the coated product with a lithium source and sintering same to obtain the coated lithium-rich metal oxide material.

11. The method according to claim 10, wherein the coated lithium-rich metal oxide material comprises an inner core and a coating layer coating the inner core, wherein the inner core comprises $Li_aMO_y$, and the coating layer comprises one or more of carbon, silicon oxides and metal oxides;
   wherein the a, M and y are as described in any one of claims 1 to 9.

12. The method according to claim 10 or 11, wherein the coated lithium-rich metal oxide material is the coated lithium-rich metal oxide material according to any one of claims 1 to 9.

13. The method according to any one of claims 10 to 12, wherein the operating parameters for the plasma enhanced chemical vapor deposition method comprise:

   a microwave power being 200 to 1000 W, and optionally 200 to 800 W or 500 to 1000 W; and/or,
   a gas pressure inside a chemical vapor deposition furnace being -10 to 1000 Pa, and optionally 10 to 1000 Pa or -10 to 100 Pa; and/or,
   a temperature inside the chemical vapor deposition furnace being 400°C to 600°C, and optionally 450°C to 550°C; and/or,
   a deposition time being 2 to 10 h, optionally 4 to 8 h, and more optionally 5 to 8 h; and/or,
   a gas flow rate at a gas inlet of the chemical vapor deposition furnace being 10 to 1000 sccm, optionally 100 to 700 sccm, and more optionally 200 to 500 sccm.

14. The method according to any one of claims 10 to 13, wherein the raw material used in the coating treatment is selected from one or more of carbon sources, silicon oxide sources and metal oxide sources;

   optionally, the raw material used in the coating treatment is selected from one or more of organic carbon sources, organic silicon sources, inorganic silicon sources, organic aluminum sources, inorganic aluminum sources, organic titanium sources and inorganic titanium sources; and
   optionally, the raw material used in the coating treatment is selected from one or more of ethylene, acetylene, methane, acetone, ethanol, benzene, ethyl orthosilicate, silicon tetrachloride, aluminum isopropoxide, tetrabutyl titanate and titanium tetrachloride, and more optionally one or more of ethylene, acetylene, methane, tetraethyl orthosilicate, aluminum isopropoxide and tetrabutyl titanate.

15. The method according to any one of claims 10 to 14, wherein the sintering temperature is 500°C to 700°C, optionally 550°C to 650°C, and more optionally 600°C to 650°C; and/or,

   the sintering time is 4 h to 10 h, optionally 6 h to 8 h, and more optionally 6 h to 7 h; and/or,
   the heating rate of the sintering is 2°C/min to 8°C/min, and optionally 4°C/min to 6°C/min; and/or,
   the sintering is performed in an inert atmosphere.

16. The method according to any one of claims 10 to 15, wherein the molar ratio of the lithium element in the lithium source to the $Li_zMO_{y'}$ is (a-z) : 1.

17. The method according to any one of claims 10 to 16, wherein

   the $Li_zMO_{y'}$ is crushed before the coating treatment; and/or,
   before the coating treatment, a raw material used in the coating treatment is gasified, optionally at 300°C to 500°C; and/or,
   the prepared coated lithium-rich metal oxide material is crushed and screened, optionally in a dry environment.

18. The method according to any one of claims 10 to 17, wherein the $Li_zMO_{y'}$ is prepared by the following steps:

mixing a lithium source and a source of an M element, and sintering same; wherein the molar ratio of the lithium element in the lithium source to the M element in the source of the M element is 0.98 : 1 to 1.09 : 1, optionally 0.98 : 1 to 1.02 : 1 or 1 : 1 to 1.09 : 1, and more optionally 1 : 1 to 1.05 : 1.

19. The method according to claim 18, wherein in the steps of preparing the $Li_zMO_{y'}$:

the sintering temperature is 400°C to 600°C, and optionally 450°C to 550°C; and/or,
the sintering time is 2 h to 8 h, and optionally 4 h to 6 h; and/or,
the heating rate of the sintering is 4°C/min to 10°C/min, and optionally 6°C/min to 8°C/min; and/or,
the sintering is performed in an inert atmosphere.

20. The method according to claim 18 or 19, wherein

the lithium source comprises one or more of lithium oxide, lithium carbonate, lithium oxalate, lithium acetate and lithium hydroxide; and/or,
the source of the M element is selected from one or more of oxides, hydroxides, halides, sulfates, carbonates, nitrates, oxalates, acetates, sulfides and nitrides of the M element, and optionally oxides of the M element.

21. A method for testing a coating layer in a coated lithium-rich metal oxide material, including the following steps:

providing a coated lithium-rich metal oxide material, which comprises an inner core and a coating layer coating the inner core; the inner core comprises $Li_aMO_y$; wherein M comprises one or more elements of Ni, Co, Fe, Mn, Zn, Mg, Ca, Cu, Sn, Mo, Ru, Ir, V, Nb and Cr; $2 \leq a \leq 6$, and $2 \leq y \leq 4$; the coating layer comprises one or more of carbon, silicon oxides and metal oxides;
mixing the coated lithium-rich metal oxide material with a solvent at a mass ratio of 1 : 50 to 1 : 1, and optionally a mass ratio of 1 : 50 to 1 : 10, wherein the solvent is composed of water and ethanol, the mass content of the water in the solvent is b, and b satisfies: when $2 \leq a < 3$, b = 100% - a × 10%; when $3 \leq a < 4$, b = 100% - a × 20%; and when $4 \leq a \leq 6$, b = 0;
separating a liquid phase substance in the obtained mixture, carrying out titration on the liquid phase substance to calculate the content of the dissolved free lithium in the coated lithium-rich metal oxide material, i.e., a d value, and confirming whether the d value satisfies:
when $2 \leq a < 3$, d $\leq$ 500 ppm; when $3 \leq a < 4$, d $\leq$ 1000 ppm; and when $4 \leq a \leq 6$, d $\leq$ 1500 ppm.

22. The coated lithium-rich metal oxide material according to claim 2 or the method according to claim 21, wherein

the mixing time is 1 min to 4 min, and optionally 1 min to 3 min; and/or,
the mixing is carried out under a stirring condition of a rotation speed of 200 rpm to 800 rpm, and optionally 400 rpm to 800 rpm; and/or,
the test is carried out at 25°C; and/or,
the titration is potentiometric titration.

23. The coated lithium-rich metal oxide material according to claim 2 or the method according to claim 21, wherein the content of the dissolved free lithium in the coated lithium-rich metal oxide material is tested by the following steps:

mixing the coated lithium-rich metal oxide material with a solvent at a mass ratio of 1 : 50 to 1 : 1, and optionally a mass ratio of 1 : 50 to 1 : 10, wherein the solvent is composed of water and ethanol, the mass content of water in the solvent is b, and b satisfies: when $2 \leq a < 3$, b = 100% - a × 10%; when $3 \leq a < 4$, b = 100% - a × 20%; and when $4 \leq a \leq 6$, b = 0;
separating the liquid phase substance in the obtained mixture, taking the liquid phase substance, and carrying out potentiometric titration with an ethanol solution of hydrochloric acid as a titrant, wherein the volumes of the consumed titrant corresponding to the two electric potential jump points in the titration process are $V_1$ mL and $V_2$ mL, respectively, and $V_2 > V_1$; and
calculating the content of the dissolved free lithium in the coated lithium-rich metal oxide material, i.e., the d value, according to the following formula;

$$d = C \times V_a \times (69.4684V_2 - 0.0424V_1) / (m \times V_b)$$

wherein,

m represents the mass of the coated lithium-rich metal oxide material, in g;
$V_a$ represents the volume of the solvent, in mL;
$V_b$ represents the volume of the taken liquid phase substance, in mL; and
C represents the concentration of hydrochloric acid in the titrant, in mol/L.

24. A positive electrode plate comprising a coated lithium-rich metal oxide material according to any one of claims 1 to 9 or any one of claims 22 to 23, or a coated lithium-rich metal oxide material prepared by a method according to any one of claims 10 to 20,

25. A battery comprising a coated lithium-rich metal oxide material according to any one of claims 1 to 9 or any one of claims 22 to 23, a coated lithium-rich metal oxide material prepared by a method according to any one of claims 10 to 20, or a positive electrode plate according to claim 24.

26. A power consuming device comprising a battery according to claim 25.

**5**

FIG. 1

**5**

53

52

52

51

FIG. 2

**4**　　　　5　　5

5

FIG. 3

1

FIG. 4

1

2

4 4 4

4
4
4

3

FIG. 5

FIG. 6

*FIG. 7*

*FIG. 8*

*FIG. 9*

## INTERNATIONAL SEARCH REPORT

| International application No. |
|---|
| **PCT/CN2022/130329** |

**A. CLASSIFICATION OF SUBJECT MATTER**

H01M4/485(2010.01)i; H01M4/525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 富锂, Li2NiO2, Li2CuO2, Li2MnO3, Li3VO4, Li3NbO4, Li5FeO4, Li6CoO4, 包覆, 碳, 二氧化硅, SiO2, 氧化铝, 氧化钛, Al2O3, TiO2, 重量增长率, 致密, 锂源, 烧结, 煅烧, 等离子, 化学气相沉积, CVD, lithium, rich, coat+, carbon, silica, titania, weight, growth, rate, dense, lithium source, sinter, calcination, plasma, chemical, vapor, deposition

**C. DOCUMENTS CONSIDERED TO BE RELEVANT**

| Category* | Citation of document, with indication, where appropriate, of the relevant passages | Relevant to claim No. |
|---|---|---|
| X | CN 115215376 A (SHENZHEN DEFANGCHUANGYU NEW ENERGY TECHNOLOGY CO., LTD.) 21 October 2022 (2022-10-21) description, paragraphs 33-88 | 1-9, 22-26 |
| X | CN 111725576 A (HUBEI RT ADVANCED MATERIALS CO., LTD.) 29 September 2020 (2020-09-29) description, paragraphs 30-62 | 1-9, 22-26 |
| X | CN 115172700 A (GUANGDONG BRUNP RECYCLING TECHNOLOGY CO., LTD. et al.) 11 October 2022 (2022-10-11) description, paragraphs 6-46 | 1-9, 22-26 |
| X | CN 115295795 A (SHENZHEN DEFANGCHUANGYU NEW ENERGY TECHNOLOGY CO., LTD.) 04 November 2022 (2022-11-04) description, paragraphs 5-47 | 1-9, 22-26 |
| A | US 2016260965 A1 (UCHICAGO ARGONNE, LLC) 08 September 2016 (2016-09-08) entire document | 1-26 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 May 2023** | **24 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/130329**

**C.    DOCUMENTS CONSIDERED TO BE RELEVANT**

| Category* | Citation of document, with indication, where appropriate, of the relevant passages | Relevant to claim No. |
|---|---|---|
| A | CN 105958034 A (FUJIAN NORMAL UNIVERSITY) 21 September 2016 (2016-09-21) entire document | 1-26 |

Form PCT/ISA/210 (second sheet) (July 2022)

**INTERNATIONAL SEARCH REPORT**
Information on patent family members

International application No.

**PCT/CN2022/130329**

| Patent document cited in search report | | | Publication date (day/month/year) | Patent family member(s) | | | Publication date (day/month/year) |
|---|---|---|---|---|---|---|---|
| CN | 115215376 | A | 21 October 2022 | None | | | |
| CN | 111725576 | A | 29 September 2020 | None | | | |
| CN | 115172700 | A | 11 October 2022 | None | | | |
| CN | 115295795 | A | 04 November 2022 | None | | | |
| US | 2016260965 | A1 | 08 September 2016 | US | 10833321 | B2 | 10 November 2020 |
| CN | 105958034 | A | 21 September 2016 | None | | | |

Form PCT/ISA/210 (patent family annex) (July 2022)